# EUROPEAN PATENT APPLICATION

(11) **EP 4 703 916 A1**
(43) Date of publication of application: **04.03.2026**
(21) Application number: 25172373.0
(22) Date of filing: 24.04.2025
(51) Int. Cl.: G06F 16/93, G06F 40/197, G06N 20/00, G06Q 10/101, G06Q 10/10

(54) **MULTI-AGENT REPORTS FOR ELECTRONIC DOCUMENTS**

(30) Priority: 30.08.2024 US 202418820559; 30.08.2024 US 202418821248; 30.08.2024 US 202418820639; 30.08.2024 US 202418821285
(71) Applicant: DocuSign, Inc., San Francisco, CA 94105 (US)
(72) Inventor: Zhao, Bing, San Jose, CA (US); Kommalapati, Hanumantha Rao, Kirkland, WA (US); Narayanan, Kaushik, Bellevue, WA (US); Kota, Rama Chandra, Kirkland, WA (US); He, Yan, Bellevue, WA (US)
(74) Representative: Meissner Bolte Nürnberg

(57) **Abstract**

A system determines first revision information based on a first plurality of changes and generates, based on the first revision information and content of an electronic document, first feedback information for the first persona. The system determines second revision information based on the second plurality of changes and generates, based on the second revision information and the content of the electronic document, second feedback information for the second persona. The system generates, based on the first feedback information for the first persona and the second feedback information for the second persona, a multi-agent report for the electronic document and outputs the multi-agent report.

## Description

This application claims priority to US Patent Application No. 18/820,559, filed 30 August 2024, US Patent Application No. 18/821,248, filed 30 August 2024, US Patent Application No. 18/820,639, filed 30 August 2024, US Patent Application No. 18/821,285, filed 30 August 2024, the entire contents each of which is incorporated herein by reference.

This disclosure relates generally to electronic document management.

Electronic document management allows for agreements to be electronically executed. For example, two parties may propose changes to an electronic agreement, and when the electronic agreement is acceptable, both parties may electronically sign the electronic agreement.

A system, such as a document management system, may be configured to provide insights about a pending clause of an electronic agreement being negotiated. For example, the system may identify a profile for each agent based on the company/organization's profiles, previous history of contracts, and their revisions (e.g., redlining or changes in text), renewals, and/or external data (e.g., data on the Internet). Each agent is defined by a specialized persona, such as, for example, legal analysis, financial review, compliance checking, or technical validation. The system may use each profile to evaluate an electronic document for a corresponding role. For example, the system may use the legal profile to generate a legal agent. In this example, the system may generate, with one or more machine learning models, legal feedback for the electronic document based on the legal agent. Similarly, the system may use a financial profile to generate a financial agent. In this example, the system may generate, with the one or more machine learning models, financial feedback for the electronic document based on the financial agent. The system may generate, based on the feedback information for each persona, a multi-agent report for the electronic document. For instance, the system may generate user interface data indicating the multi-agent report and output the user interface data to a user device for display.

In some examples, a system, such as, for example, a document management system, may generate agents configured to communicate and collaborate with each other to provide a holistic analysis of an electronic document (e.g., a smart contract). For example, the system may generate, with one or more machine learning models, legal feedback for an electronic document based on the financial agent that indicates a particular service of the electronic document cannot operate in Japan. In this example, the system may generate, with one or more machine learning models, technical feedback for the electronic document based on the technical agent that indicates the particular service of the electronic document must operate in Japan. The system may proactively resolve the conflict between the legal agent and the technical agent automatically or with user input and cause the agents to collaborate to update feedback information. For instance, the system may feedback the output of the technical agent indicating that the particular service must operate in Japan to the legal agent. In this way, the agents may generate a multi-agent report with conflicts reduced or even eliminated.

In some examples, a system, such as, for example, a document management system, may proactively split and/or merge agents. For example, the system may proactively split a realtor agent into a buyer agent and a seller agent in response to the system determining that a cosine distance between a first cluster of vector embeddings for source data for the buyer agent and a second cluster of vector embeddings for source data for the seller agent satisfies a threshold value for splitting agents. As another example, the system may proactively merge a financial agent for goods and a financial agent for services into a single financial agent for both goods and services in response to the system determining that a cosine distance between a first cluster of vector embeddings for source data for the financial agent for goods and a second cluster of vector embeddings for source data for the financial agent for goods satisfies a threshold value for merging agents. In this way, the system may automatically improve an accuracy of outputs of agents that are relying on different source data and automatically reduces substantially duplicative agents to help to reduce a complexity of the system.

In some examples, a system (e.g., a document management system) may generate a workflow for actions to be performed by agents (e.g., software agents). For example, the system may generate user information for a particular user (e.g., a human being or group of human beings in a particular role) and determine a conversation history between the user and a plan generator of the system. The user information may include, for example, personal preferences and/or a role of the user. The system may determine definition information for each agent of the agents. For example, the system may determine an agent ID, a description of the agent (e.g.., providing examples of when to select the agent), input parameters (e.g., mandatory or optional), and/or output parameters (e.g., mandatory or optional). In this example, the system may determine a workflow based on the definition information for the agent and user information for the user (and optionally the conversation history). In some examples, the system may generate an executed document (e.g., an electronic document that has been electronically signed) using the workflow. For example, the system may generate the workflow to include agents to perform an ordered set of actions including, for example, generating a multi-agent report, receiving changes to an electronic document after causing a display of the multiagent report, initiating an identification verification (IDV) process, causing a display of a finalized version of the electronic document for signature, and generating the executed document based on a user input responsive to the display of the finalized version of the electronic document. As such, the system may generate specialized customized workflows for a particular entity (e.g., human being) and for the particular set of software agents associated with the entity. In this way, the workflow generator may suggest a workflow that is more relevant and more accurate to the particular entity compared to systems that rely solely on predetermined rules.

While the above example included a workflow directed to the generation of an executed document, workflows may be used for other processes. For example, in response to a user query of "Find a flight to Pittsburg," the system may determine metadata (e.g., a metaprompt) that indicates the user information and definition information. In this example, the system may generate, with one or more machine learning models (e.g., a generative machine learning model), may determine "slots" of a workflow, where each slot defines a respective agent to be used. For instance, the plan generator may include a first slot that specifies an agent for natural language understanding with input data to confirm an airline and date/time, a second slot for an agent to search for a flight using the airline, data/time determined in the previous slot and airports using the user profile and prompt, a third slot for an agent to select/confirm the flight identified by the previous slot, and a fourth slot to book the flight.

The techniques described herein may provide one or more technical advantages that realize one or more practical applications. For example, proactively generating a multi-agent report for the electronic document and/or outputting the multi-agent report for the electronic document to a user device may improve the efficiency of a document management system by, e.g., reducing a number of versions of an electronic document managed by the document management system and/or reducing a time to negotiate the electronic document, which may reduce an amount of computational burden on the document management system, reduce an amount of power consumed by the document management system, reduce an amount of data transmitted and/or received by the document management system, and/or reduce a memory usage of the document management system.

In some examples, proactively generating updated feedback information based on resolving a conflict between agents, may improve the efficiency of a document management system by, e.g., reducing a number of versions of an electronic document managed by the document management system and/or reducing a time to negotiate the electronic document compared to systems that do not generate updated feedback information based on resolving a conflict, which may further reduce an amount of computational burden on the document management system, reduce an amount of power consumed by the document management system, reduce an amount of data transmitted and/or received by the document management system, and/or reduce a memory usage of the document management system.

Determining a similarity value based on the first plurality of vector embeddings and the second plurality of vector embeddings may allow for a merging and/or splitting of agents, which may improve the efficiency of a document management system by, e.g., reducing an amount of source data stored and/or processed for generating feedback information compared to systems that do not merge or split agents. Reducing an amount of source data stored and/or processed for generating feedback information may reduce an amount of computational burden on the document management system, reduce an amount of power consumed by the document management system, reduce an amount of data transmitted and/or received by the document management system, and/or reduce a memory usage of the document management system.

Proactively determining an ordered list of agent assignments (e.g., workflows) based on definition information for agents may improve an accuracy of selecting agents (e.g., new or updated agents) compared to systems relying on manual selection of agents and/or predefined rules selecting agents, which may reduce a number of unnecessary actions in a workflow. Reducing a number of unnecessary actions in a workflow may decrease a number of actions and/or agents used to complete a workflow, which may reduce an amount of computational burden on the document management system, reduce an amount of power consumed by the document management system, reduce an amount of data transmitted and/or received by the document management system, and/or reduce a memory usage of the document management system.

In one example, a system for generating multi-agent reports for electronic documents comprising processing circuitry and computer readable media. The computer readable media includes instructions that, when executed, cause the processing circuitry to, based on a determination that each change of a first plurality of changes to a plurality of historical documents is associated with a first user and that the first user is assigned a first persona, determine first revision information based on the first plurality of changes. The instructions further cause the instructions to generate, based on the first revision information and content of an electronic document, first feedback information for the first persona and, based on a determination that each change of a second plurality of changes to the plurality of historical documents is associated with a second user and that the second user is assigned a second persona, determine second revision information based on the second plurality of changes. The instructions further cause the instructions to generate, based on the second revision information and the content of the electronic document, second feedback information for the second persona; and generate, based on the first feedback information for the first persona and the second feedback information for the second persona, a multi-agent report for the electronic document. The instructions further cause the instructions to output the multi-agent report.

In another example, a method for generating multi-agent reports for electronic documents includes, based on a determination that each change of a first plurality of changes to a plurality of historical documents is associated with a first user and that the first user is assigned a first persona, determining, by processing circuitry, first revision information based on the first plurality of changes. The method further includes generating, by the processing circuitry and based on the first revision information and content of an electronic document, first feedback information for the first persona. The method further includes based on a determination that each change of a second plurality of changes to the plurality of historical documents is associated with a second user and that the second user is assigned a second persona, determining, by the processing circuitry, second revision information based on the second plurality of changes. The method further includes generating, by the processing circuitry and based on the second revision information and the content of the electronic document, second feedback information for the second persona and generating, by the processing circuitry and based on the first feedback information for the first persona and the second feedback information for the second persona, a multi-agent report for the electronic document. The method further includes outputting, by the processing circuitry, the multi-agent report.

In one example, computer-readable media is encoded with instructions that, when executed, cause processing circuitry to, based on a determination that each change of a first plurality of changes to a plurality of historical documents is associated with a first user and that the first user is assigned a first persona, determine first revision information based on the first plurality of changes. The instructions further cause the processing circuitry to generate, based on the first revision information and content of an electronic document, first feedback information for the first persona, The instructions further cause the processing circuitry to, based on a determination that each change of a second plurality of changes to the plurality of historical documents is associated with a second user and that the second user is assigned a second persona, determine second revision information based on the second plurality of changes. The instructions further cause the processing circuitry to generate, based on the second revision information and the content of the electronic document, second feedback information for the second persona and generate, based on the first feedback information for the first persona and the second feedback information for the second persona, a multi-agent report for the electronic document. The instructions further cause the processing circuitry to output the multi-agent report.

In another example, a system for generating multi-agent reports for electronic documents comprising processing circuitry and computer readable media. The computer readable media includes instructions that, when executed, cause the processing circuitry to generate, based on a first agent for a first persona and content of an electronic document, first feedback information for the first persona. The instructions further cause the processing circuitry to, based on a determination that the first feedback information for the first persona indicates a first value for an attribute of the electronic document that causes a conflict with second feedback information for a second persona and that a second value for the attribute of the electronic document has been selected to resolve the conflict, generate, based on the first agent for the first persona, the second value for the attribute, and the content of the electronic document, updated first feedback information for the first persona. The instructions further cause the processing circuitry to generate, based on the updated first feedback information for the first persona, a multi-agent report for the electronic document and output the multi-agent report.

In one example, a method for resolving conflicts between agents for generating multi-agent reports for electronic documents includes generating, by processing circuitry and based on a first agent for a first persona and content of an electronic document, first feedback information for the first persona. The method further includes, based on a determination that the first feedback information for the first persona indicates a first value for an attribute of the electronic document that causes a conflict with second feedback information for a second persona and that a second value for the attribute of the electronic document has been selected to resolve the conflict, generating, by the processing circuitry and based on the first agent for the first persona, the second value for the attribute, and the content of the electronic document, updated first feedback information for the first persona. The method further includes generating, by the processing circuitry and based on the updated first feedback information for the first persona, a multi-agent report for the electronic document and outputting, by the processing circuitry, the multi-agent report.

In another example, computer-readable media is encoded with instructions that, when executed, cause processing circuitry to generate, based on a first agent for a first persona and content of an electronic document, first feedback information for the first persona. The instructions further cause the processing circuitry to, based on a determination that the first feedback information for the first persona indicates a first value for an attribute of the electronic document that causes a conflict with second feedback information for a second persona and that a second value for the attribute of the electronic document has been selected to resolve the conflict, generate, based on the first agent for the first persona, the second value for the attribute, and the content of the electronic document, updated first feedback information for the first persona. The instructions further cause the processing circuitry to generate, based on the updated first feedback information for the first persona, a multi-agent report for the electronic document and output the multi-agent report.

In one example, a system for managing agents providing feedback to electronic documents includes processing circuitry and computer readable media. The computer readable media includes instructions that, when executed, cause the processing circuitry to, based on a determination that each change of a first plurality of changes to a first plurality of historical documents is associated with a first user and that the first user is assigned a first persona, generate a first agent for the first persona based on both the first plurality of changes and first source data. The instructions further cause the processing circuitry to determine a first plurality of vector embeddings for the first agent based on the first source data. The instructions further cause the processing circuitry to determine a second plurality of vector embeddings based on second source data and determine a similarity value based on the first plurality of vector embeddings and the second plurality of vector embeddings. The instructions further cause the processing circuitry to, based on the similarity value, determine that the first source data is associated with a second persona different from the first persona. The instructions further cause the processing circuitry to generate a second agent for the second persona based on the first source data.

In another example, a method for managing agents providing feedback to electronic documents includes, based on a determination that each change of a first plurality of changes to a first plurality of historical documents is associated with a first user and that the first user is assigned a first persona, generating, by processing circuitry, a first agent for the first persona based on both the first plurality of changes and first source data. The method further includes determining, by the processing circuitry, a first plurality of vector embeddings for the first agent based on the first source data and determining, by the processing circuitry, a second plurality of vector embeddings based on second source data. The method further includes determining, by the processing circuitry, a similarity value based on the first plurality of vector embeddings and the second plurality of vector embeddings and, based on the similarity value, determining, by the processing circuitry, that the first source data is associated with a second persona different from the first persona. The method further includes generating, by the processing circuitry, a second agent for the second persona based on the first source data.

In one example, computer-readable media is encoded with instructions that, when executed, cause processing circuitry to, based on a determination that each change of a first plurality of changes to a first plurality of historical documents is associated with a first user and that the first user is assigned a first persona, generate a first agent for the first persona based on both the first plurality of changes and first source data. The instructions further cause the processing circuitry to determine a first plurality of vector embeddings for the first agent based on the first source data and determine a second plurality of vector embeddings based on second source data. The instructions further cause the processing circuitry to determine a similarity value based on the first plurality of vector embeddings and the second plurality of vector embeddings and, based on the similarity value, determine that the first source data is associated with a second persona different from the first persona. The instructions further cause the processing circuitry to generate a second agent for the second persona based on the first source data.

In another example, a system for generating executed electronic documents includes processing circuitry and computer readable media. The computer readable media includes instructions that, when executed, cause the processing circuitry to determine definition information for an agent of a plurality of agents configured to perform one or more actions associated with an electronic document and determine, based on the definition information for the agent and user information for a user associated with the electronic document, an ordered list of agent assignments indicating a plurality of actions to be performed by the plurality of agents. The instructions further cause the processing circuitry to, based on a determination that the ordered list of agent assignments indicates the agent, determine, based on the definition information for the agent, input data for the agent and cause the agent to generate output data based on the input data. The instructions further cause the processing circuitry to generate an executed document based on the output data.

In one example, a method for generating executed electronic documents includes determining, by processing circuitry, definition information for an agent of a plurality of agents configured to perform one or more actions associated with an electronic document and determining, by the processing circuitry and based on the definition information for the agent and user information for a user associated with the electronic document, an ordered list of agent assignments indicating a plurality of actions to be performed by the plurality of agents. The method further includes, based on a determination that the ordered list of agent assignments indicates the agent, determining, by the processing circuitry and based on the definition information for the agent, input data for the agent and cause the agent to generate output data based on the input data. The method further includes generating, by the processing circuitry, an executed document based on the output data.

In another example, computer-readable media is encoded with instructions that, when executed, cause processing circuitry to determine definition information for an agent of a plurality of agents configured to perform one or more actions associated with an electronic document and determine, based on the definition information for the agent and user information for a user associated with the electronic document, an ordered list of agent assignments indicating a plurality of actions to be performed by the plurality of agents. The instructions further cause the processing circuitry to, based on a determination that the ordered list of agent assignments indicates the agent, determine, based on the definition information for the agent, input data for the agent and cause the agent to generate output data based on the input data. The instructions further cause the processing circuitry to generate the executed document based on the output data.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF THE DRAWINGS

FIG. 1 is a block diagram illustrating an example computing environment, in accordance with the techniques of this disclosure.
FIG. 2 is a block diagram illustrating an example document management system, in accordance with techniques of this disclosure.
FIG. 3 is a conceptual flow chart illustrating an example process for generating a profile for a technical persona, in accordance with one or more techniques of this disclosure.
FIG. 4 is a conceptual flow chart illustrating an example process for generating a profile for a legal persona, in accordance with one or more techniques of this disclosure.
FIG. 5 is a conceptual flow chart illustrating an example process for generating a multi-agent report, in accordance with one or more techniques of this disclosure.
FIG. 6A is a conceptual flow chart illustrating an example process for resolving a conflict, in accordance with one or more techniques of this disclosure.
FIG. 6B is a conceptual flow chart illustrating an example process for generating updated feedback information, in accordance with one or more techniques of this disclosure.
FIG. 7 is a conceptual flow chart illustrating an example process for merging agents, in accordance with one or more techniques of this disclosure.
FIG. 8 is a conceptual flow chart illustrating an example process for splitting agents, in accordance with one or more techniques of this disclosure.
FIG. 9 is a conceptual flow chart illustrating example agents for a workflow, in accordance with one or more techniques of this disclosure.
FIG. 10 is a conceptual flow chart illustrating an example process for managing a workflow, in accordance with one or more techniques of this disclosure.
FIG. 11 is a conceptual flow chart illustrating an example process for executing a workflow for responding to a query, in accordance with one or more techniques of this disclosure.
FIG. 12 is a conceptual flow chart illustrating an example process for executing a workflow for generating an executed document, in accordance with one or more techniques of this disclosure.
FIG. 13 is a conceptual flow chart illustrating example details for executing a workflow for responding to a request, in accordance with one or more techniques of this disclosure.
FIG. 14 is a conceptual flow chart illustrating example details for executing a workflow using a search cluster, in accordance with one or more techniques of this disclosure.
FIG. 15 is a flow chart illustrating an example process for generating multi-agent reports for electronic documents, in accordance with techniques of this disclosure.
FIG. 16 is a flow chart illustrating an example process for resolving conflicts between agents for generating multi-agent reports for electronic documents, in accordance with techniques of this disclosure.
FIG. 17 is a flow chart illustrating an example process for managing agents providing feedback to electronic documents, in accordance with techniques of this disclosure.
FIG. 18 is a flow chart illustrating an example process for generating multi-agent reports for electronic documents using an ordered list of agent assignments, in accordance with techniques of this disclosure.

Like reference characters denote like elements throughout the text and figures.

### DETAILED DESCRIPTION

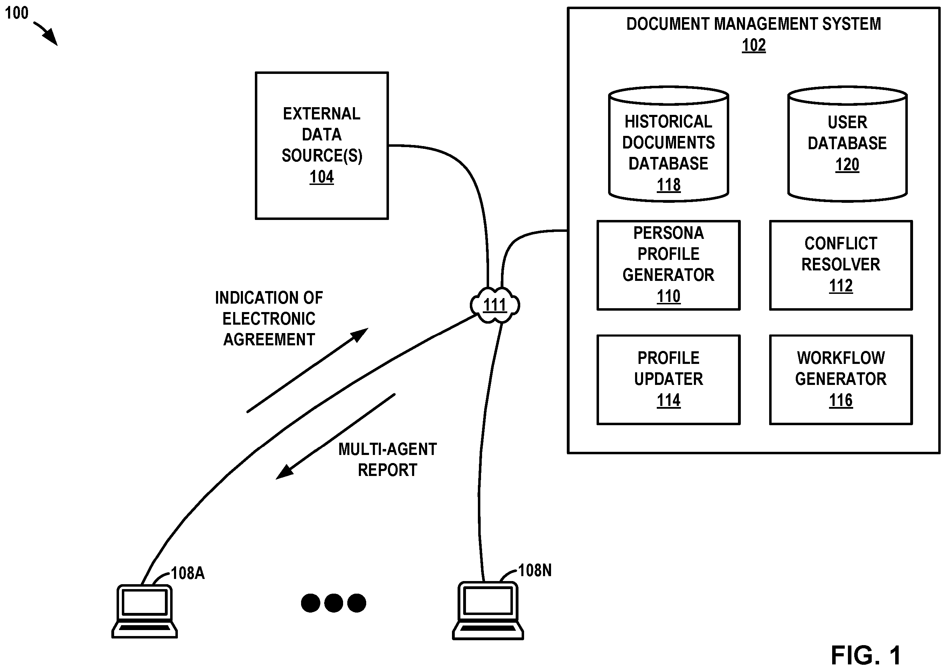

FIG. 1 is a block diagram illustrating an example computing environment 100, in accordance with the techniques of this disclosure. In the example of FIG. 1, computing environment 100 includes document management system 102, one or more external data sources 104 (referred to herein as simply, "externa data source 104"), user devices 108A-108N (collectively referred to herein as, "user devices 108"), and network 111.

Document management system 102 may provide generation and management of electronic documents or document packages for users associated with user devices 108. In the example of FIG. 1, document management system 102 includes historical documents database 118, user database 120, persona profile generator 110, conflict resolver 112, profile updater 114, and workflow generator 116. In some examples, a document management system may omit one or more of persona profile generator 110, conflict resolver 112, profile updater 114, and workflow generator 116. Document management system 102 may include a collection of hardware devices, software components, and/or data stores that can be used to implement one or more applications or services provided to user devices 108 via network 111. In some examples, document management system 102 may represent a cloud computing system that provides one or more services via a network. That is, in some examples, document management system 102 may be a distributed computing system.

Document management system 102 may allow user devices 108 to access documents, via network 111 using a communication protocol, as if such document was stored locally (e.g., to a hard disk of a corresponding user devices 108). Example communication protocols for accessing documents and objects may include, but are not limited to, Server Message Block (SMB), Network File System (NFS), or AMAZON Simple Storage Service (S3).

Network 111 may include the Internet and/or may include or represent any public or private communications network or other network. For instance, network 111 may be a cellular network, Wi-Fi^{®}, ZigBee^{®}, Bluetooth^{®}, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 111 using any suitable communication techniques. Network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 111 using one or more network links. The links coupling such devices or systems to network 111 may be Ethernet, Asynchronous Transfer Mode (ATM) or other types of network connections, and such connections may be wireless and/or wired connections. One or more of the devices or systems illustrated in FIG. 1 or otherwise on network 111 may be in a remote location relative to one or more other illustrated devices or systems.

Data exchanged over network 111 may be represented using any suitable format, such as hypertext markup language (HTML), extensible markup language (XML), or JavaScript Object Notation (JSON). In some aspects, network 111 may include encryption capabilities to ensure the security of documents. For example, encryption technologies may include secure sockets layers (SSL), transport layer security (TLS), virtual private networks (VPNs), and Internet Protocol security (IPsec), among others.

User devices 108 may interact with document management system 102 through a user account with document management system 102 and optionally one or more user devices accessible to that user. Examples of user devices 108 may include, but are not limited to, portable, mobile, or other devices, such as, for example, mobile phones (e.g., smartphones), laptop computers, desktop computers, tablet computers, smart television systems, server computers, or mainframes. In situations in which document management system 102 stores and uses information of users operating user devices 108, document management system 102 may request explicit permission from the users prior to storing and using any personally identifiable information of the users.

Users of user devices 108 may represent an entity, such as, for example, an individual user, a group, an organization, a governmental entity, or a business entity (e.g., a corporation, limited liability company (LLC), or professional organization) that is able to interact with document packages (or other content) generated on or managed by document management system 102. Each user may be associated with a username, email address, full or partial legal name, or other identifier that may be used by document management system 102 to identify the user and to control the ability of the user to view, modify, execute, or otherwise interact with document packages managed by document management system 102.

Document management system 102 may be configured to allow users of user devices 108 to create and send documents to one or more recipients for negotiation, collaborative editing, electronic execution (e.g., electronic signature), automation of contract fulfillment, archival, and analysis, among other tasks. Document management system 102 may support negotiations between different entities. For example, user device 108A may be associated with a first entity (e.g., a business entity, a particular human being, or a governmental entity) and user device 108N may be associated with a second entity. In this example, user device 108A may send, during a negotiation, a first version of an electronic agreement (e.g., an electronic contract) to document management system 102. Document management system 102 may store the first version of the electronic agreement in historical document database 118 and output the first version of the electronic agreement to user device 108N. In this example, user device 108N may generate a second version of the electronic agreement that includes one or more changes from the first version of the electronic agreement and may send the second version of the electronic agreement to document management system 102. Document management system 102 may store the second version of the electronic agreement in historical document database 118 and output the second version of the electronic agreement to user device 108A. The process may continue until both parties agree (e.g., electronically sign) to the final version of the electronic agreement. In this example, document management system 102 may store the final version of the electronic agreement in historical document database 118. Throughout negotiations, document management system 102 may monitor and/or track the state of the negotiation as well as proactively facilitate negotiations. For example, document management system 102 may automatically provide reminders to user devices 108.

Document management system 102 may be located on premises and/or in one or more data centers, with each data center a part of a public, private, or hybrid cloud. The applications or services may be distributed applications. The applications or services may support enterprise software, financial software, office or other productivity software, data analysis software, customer relationship management, web services, educational software, database software, multimedia software, information technology, healthcare software, or other types of applications or services. The applications or services may be provided as a service (-aaS) for Software-aaS, System-aaS, Infrastructure-aaS, Data Storage-aas (dSaaS), or other type of service.

External data source 104 may provide access to information (e.g., third party information) stored outside of document management system 102. For example, external data source 104 may include publicly and/or privately (e.g., with registration or subscription fees) available information from the Internet, such as, for example, news releases, blog reports, company profiles, financial reports, or social media. In some examples, external data source 104 may store data generated outside of document management system 102 and optionally store data generated by document management system 102. External data source 104 may be implemented using one or more storage systems, such as, for example, web servers and cloud computing systems.

Document management system 102 may provide and/or support a playbook documents, also referred to herein as simply a "playbook." For example, the first entity may generate internally and/or with document management system 102 a set of rules for negotiating with other entities. For example, a legal department of the first entity may specify a countries for a jurisdiction clause or a shipping department may specify limitations on delivery timelines. In some examples, document management system 102 may automatically generate the playbook, for example, by inferring rules from previously executed documents. Playbooks may not be shared to other entities (e.g., playbooks are confidential). That is, a second entity would typically not have access to a playbook of a first entity and the first entity would typically not have access to a playbook of the second entity. A playbook may specify a standard value and zero or more fallback values for an attribute of an electronic document. For instance, the playbook may specify first terms for a first warranty clause as a first value and second terms for warranty clause as a first fallback value (and optionally one or more additional fallback values).

Document management system 102 may apply and/or cause user devices 108 to apply rules of a playbook to provide insights during negotiations. For example, document management system 102 may notify user device 108A, which is associated with a first entity, that the playbook for the first entity indicates a primary jurisdiction (e.g., California) and a fallback jurisdiction (e.g., New York) that are different than that proposed in a pending agreement (e.g., Massachusetts). In this example, user device 108A may modify (e.g., with an optional user selection and/or confirmation) a clause of a pending to be compliant with the playbook of the first entity. In this example, document management system 102 may send the revised clause to user device 108N, which is associated with a second entity. In this example, however, the playbook for the second entity indicates a primary jurisdiction (e.g., Massachusetts) and a fallback jurisdiction (e.g, New York) that are different than that proposed in a pending agreement (e.g., California). As such, user device 108N may be likely to reject the change to the clause.

In some systems, individuals may manually review data of a working agreement to identify important or risky content in their own area of expertise. For example, a lawyer may review for compliance with legal standards and regulation while an Engineer may review for technical feasibility and security of implementation. In accordance with the techniques of the disclosure, document management system 102 may use a collective of specialized agents, each with distinct personas and expertise, to collaboratively evaluate and optimize smart contracts throughout their lifecycle. For example, document management system 102 may generate a multi-agent report providing richer insights to an electronic document during negotiations than systems that use only a playbook. Document management system 102 may provide a multi-agent "Chat-with-Contract" framework to offer an interface allowing interaction among different roles and between individuals and contracts, thereby facilitating a more intelligent contract review and analysis process than systems that rely only on a playbook. Document management system 102 may identify agents with personas to streamline the contract lifecycle, to help to ensure a more efficient and seamless experience compared to systems relying only on a playbook. Document management system 102 may identify agents encompassing one or more of a preparation process, a signature process, and a maintenance process, where the electronic document (e.g., contract) may undergo examination by various individuals occupying different roles within an organization, including, but not limited to, for example, one or more of finance, legal, sales, or technology sectors.

Document management system 102 may generate specialized personas that are customized for an entity using retrieval-augmented generation (RAG). The RAG may indicate data in previous contracts of the entity as well as revisions to the electronic documents. In this way, the agents provide responses that are more relevant and more accurate to the entity compared to systems that rely solely on instructions (e.g., a prompt with "you are a legal expert") to specify an area of expertise.

As described in further details herein, document management system 102 may provide a multiple agent framework that includes specialized agents and collaborative intelligence. As used herein, specialized agents may refer to agents where each agent is defined by a specialized role, such as, for example, legal analysis, financial review, compliance checking, or technical validation. Collaborative intelligence may refer to instances where agents communicate and collaborate with each other to provide a holistic analysis of the smart contract.

In accordance with the techniques of the disclosure, persona profile generator 110 of document management system 102 may perform smart contract ingestion. For example, persona profile generator 110 may perform automated contract ingestions. For instance, persona profile generator 110 may automatically ingest and parse smart contracts, extracting key terms, conditions, and/or clauses. In this example, persona profile generator 110 may include an agents identifier. For instance, persona profile generator 110 may identify, based on a profile for an entity (e.g., a company/organization), and/or a previous history of contracts for the entity (e.g., executed contracts, revisions to the previous history of contracts, and/or renewals) profiles for agents to distill for each role involved in the past. In this example, persona profile generator 110 may include an agent builder. For instance, persona profile generator 110 may translate the profiles for the agents into large language model (LLM) base models and/or prompts to an automatic agent.

Document management system 102 may provide multi-agent collaborative analysis. For example, persona profile generator 110 may generate a legal compliance agent configured to ensures that the electronic document contract adheres to relevant legal standards and regulations. Persona profile generator 110 may generate a financial risk agent configured to evaluates the financial implications and risks associated with the contract. In some examples, persona profile generator 110 may generate a technical verification agent configured to checks the technical feasibility and security of the contract's implementation. Persona profile generator 110 may generate a performance metrics agent configured to analyzes historical data to predict the performance of the contract.

For example, persona profile generator 110 may determine that changes (e.g., redlines or markups) to a historical document stored at historical documents database 118 are associated with a first user. For instance, persona profile generator 110 may determine that changes to a draft of particular agreement document are indicated from tracked changes provided by a person assigned a legal role. Based on a determination that the changes are associated with the first user and that the first user is assigned a first persona, persona profile generator 110 may determine first revision information based on the first plurality of changes. For instance, persona profile generator 110 may determine first revision information to include the tracked changes. The first revision information may optionally include changes associated with a second user assigned the first persona (e.g., another person assigned the legal role). In some instances, persona profile generator 110 may determine first revision information to include a summary of the tracked changes.

Persona profile generator 110 may generate, based on the first revision information and content of an electronic document, first feedback information for the first persona. Content of the electronic document may include, for example, information (e.g., text and/or images) viewable on the electronic document. The electronic document may include metadata (e.g., data not viewable) in addition to the content. For example, persona profile generator 110 may generate a profile for the first persona based on the first revision information. For instance, persona profile generator 110 may generate a profile for a legal persona that includes the changes and/or a summary of the changes. In this instance, persona profile generator 110 may generate an agent for the first persona based on the profile for the first persona and based on a set of historical documents of historical documents database 118. For instance, persona profile generator 110 may determine the set of historical documents (e.g., edited versions of an agreement document before execution and the executed document) to include documents where the person assigned the legal role reviewed the historical document (e.g., provided changes and/or approved without changes). Persona profile generator 110 may generate the first feedback information for the first persona based on the agent for the first persona and the content of the electronic document. For instance, persona profile generator 110 may generate, with one or more machine learning models, the first feedback information for a legal persona using the agent for the legal persona as metadata (e.g., a metaprompt) and the content of the electronic document as part of a prompt.

Similarly, persona profile generator 110 may determine that changes (e.g., redlines or markups) to a historical document stored at historical documents database 118 are associated with a second user. For instance, persona profile generator 110 may determine that changes to a draft of particular agreement document are indicated from tracked changes provided by a person assigned a technical role. Based on a determination that the changes are associated with the second user and that the second user is assigned a second persona, persona profile generator 110 may determine second revision information based on the second plurality of changes. For instance, persona profile generator 110 may determine second revision information to include the tracked changes. In some instances, persona profile generator 110 may determine second revision information to include a summary of the tracked changes.

Persona profile generator 110 may generate, based on the second revision information and content of an electronic document, second feedback information for the second persona. For example, persona profile generator 110 may generate a profile for the second persona based on the second revision information. For instance, persona profile generator 110 may generate a profile for a technical persona that includes the changes and/or a summary of the changes. In this instance, persona profile generator 110 may generate an agent for the second persona based on the profile for the second persona and based on a set of historical documents of historical documents database 118. For instance, persona profile generator 110 may determine the set of historical documents (e.g., edited versions of an agreement document before execution and the executed document) to include documents where the person assigned the technical role reviewed the historical document (e.g., provided changes and/or approved without changes). Persona profile generator 110 may generate the second feedback information for the second persona based on the agent for the second persona and the content of the electronic document. For instance, persona profile generator 110 may generate, with one or more machine learning models, the second feedback information for a technical persona using the agent for the technical persona as metadata (e.g., a metaprompt) and the content of the electronic document as part of a prompt.

Persona profile generator 110 may generate, based on the first feedback information for the first persona and the second feedback information for the second persona, a multi-agent report for the electronic document. For example, persona profile generator 110 may summarize first feedback information for the first persona and the second feedback information for the second persona. In some examples, persona profile generator 110 may aggregate the first feedback information for the first persona and the second feedback information for the second persona.

Persona profile generator 110 may output the multi-agent report to a user device 108A associated with the electronic document. For example, persona profile generator 110 may generate data for a user interface for presentation of the multi-agent report. For example, persona profile generator 110 may generate data for a user interface for presentation of the multi-agent report. Persona profile generator 110 may cause a user device to display the user interface. For example, persona profile generator 110 may output, to user device 108A associated with the electronic document (e.g., a party negotiating electronic document), an indication of the multi-agent report. In some examples, persona profile generator 110 may generate data for a user interface for presentation of the multi-agent report to include an indication of pending clauses of content of the electronic document for review along with the multi-agent report.

In response to receiving a selection from user device 108A (e.g., automatically or based on user input data) of a value for the attribute in a pending clause of the electronic document, document management system 202 may generate an updated version of the electronic agreement being negotiated. In this example, document management system 202 may store the updated version of the electronic agreement at historical documents database 218 and cause a user device to display an indication of the updated version of the electronic agreement. For example, document management system 202 may generate data for a user interface for presentation of the updated version of the electronic agreement. The process may continue until parties to the electronic document reach an agreement and proceed with executing (e.g., electronically signing) the electronic document to generate an executed document.

Conflict resolver 112 of document management system 102 may support paralleled collaborative agents functionality. For example, conflict resolver 112 may exchange, with agents, feedback information to determine the best information (e.g., to generate an electronic document and/or to answer a question). For example, conflict resolver 112 may determine that first feedback information for the first persona indicates a first value for an attribute of the electronic document that causes a conflict with second feedback information for a second persona. For instance, conflict resolver 112 may determine that a finance persona indicates feedback information requiring a delivery date before a particular date and a technical persona indicates feedback information requiring a delivery date after the particular date. In this example, conflict resolver 112 may resolve the conflict by selecting the second value for the attribute. For instance, conflict resolver 112 may select the delivery data as after the particular data based on one or more of a set of rules, an output from an agent for resolving conflicts, or user input data. Based on a determination of the conflict and that the second value for the attribute of the electronic document has been selected to resolve the conflict, conflict resolver 112 may generate updated first feedback information for the first persona based on the first agent for the first persona, the second value for the attribute, and the content of the electronic document. For instance, conflict resolver 112 may use the output of the second agent (e.g., that delivery date must be after the particular date for technical reasons) as an input to the first agent (e.g., reviewing the electronic document as a financial persona), which may support paralleled collaborative agents functionality. Conflict resolver 112 may generate, based on the updated first feedback information for the first persona, a multi-agent report for the electronic document. In this example, conflict resolver 112 may output the multi-agent report to a user device associated with the electronic document.

As described further herein, document management system 102 may include machine learning and/or artificial intelligence (AI). For example, document management system 102 may perform predictive analytics that use machine learning models to predict potential issues and/or outcomes based on historical data (e.g., historical documents). Document management system 102 may provide continuous learning functionality. For example, document management system 102 may continuously learn from new data and user feedback to improve analysis capabilities of document management system 102.

Profile updater 114 of document management system 102 may provide for an iterative explorative agent configured to observing new contracts and interactions of the contracts with the human roles (e.g., personas). Profile updater 114 may proactively merge and/or split previously built agents. In some examples, profile updater 114 may suggest or proactively add and/or delete a new agent for special roles in a chat with contracts.

For example, profile updater 114 may determine a first plurality of vector embeddings for a first agent based on first source data for the first agent. For instance, profile updater 114 may apply one or more machine learning models to the first source data to generate the first plurality of vector embeddings using a preconfigured encoder. Similarly, profile updater 114 may apply one or more machine learning models to second source data to generate a second plurality of vector embeddings using the preconfigured encoder. For instance, profile updater 114 determine whether to merge the first agent with another agent that uses the second source data. In some instances, profile updater 114 determine whether to split the first agent into a second agent that uses the first source data and a third agent that uses the second source data. Profile updater 114 may determine a similarity value based on the first plurality of vector embeddings and the second plurality of vector embeddings. For example, profile updater 114 may determine a cosine similarity value and/or Euclidean distance value. Based on the similarity value, profile updater 114 may determine that the first source data is associated with a second persona different from the first persona. For instance, profile updater 114 may determine to merge the first agent with the second agent when the similarity value exceeds (or is less than) a threshold value for merging agents. In some instances, profile updater 114 may determine to split the first agent into the second agent and the third agent when the similarity value is less than (or greater than) a threshold value for splitting agents.

Based on a determination to split or merge, profile updater 114 may proactively identify source data for generating a second agent. For example, based on a determination to split the first plurality of vector embeddings and the second plurality of vector embeddings, profile updater 114 may determine to split a first agent into a second agent and a third agent. In this example, profile updater 114 may determine first source data for the second agent based on a mapping of the first plurality of vector embeddings to the first source data. Similarly, profile updater 114 may determine second source data for the third agent based on a mapping of the second plurality of vector embeddings to the second source data. In this way, the source data for the first agent may be split into the first source data and the second source data based on a similarity indicated by the first plurality of vector embeddings and the second plurality of vector embeddings. While the above example described splitting an agent into two agents, in other examples, profile updater 114 may split an agent into more than two agents.

Based on a determination to merge the first plurality of vector embeddings and the second plurality of vector embeddings, profile updater 114 may determine to generate a second agent that includes the first agent and a third agent. In this example, profile updater 114 may determine the first source data for the first agent based on a mapping of the first agent to the first source data. Similarly, profile updater 114 may determine second source data for the third agent based on a mapping of the third agent to the second source data. While the above example described merging two agents, in other examples, profile updater 114 may merge more than two agents.

Profile updater 114 may generate the second agent for the second persona based on the first source data. For example, based on a determination to merge the first agent with the second agent, profile updater 114 may generate the second agent for the second persona based on the first source data and the second source data. For instance, profile updater 114 may proactively merge a technical agent for a first product line with a technical agent for a second product line when the first source data and the second source data becomes similar. Based on a determination to split the first agent into the second agent and a third agent, profile updater 114 may generate the second agent for the second persona based on the first source data and exclude the second source data. For instance, profile updater 114 may proactively split a performance agent for predicted profit and predicted growth into a first performance agent for predicted profit and a second performance agent for predicted growth when the first source data and the second source data becomes different.

Workflow generator 116 of document management system 102 may proactively generate a plan (e.g., a workflow) to process an electronic document to generate an executed document and/or to generate a response to a query. For example, workflow generator 116 may determine definition information for an agent. The definition information may include utilization information specifying a plain language description (e.g., "Searches lexical index for a given query.") Workflow generator 116 may determine user information including, for example, one or more of personal preferences of the user, a role for the user, or feedback from the user. Workflow generator 116 may determine a conversation history for the user with workflow generator 116.

Workflow generator 116 may determine, based on the definition information for the agent and the user information, an ordered list of agent assignments indicating actions to be performed by the agents (e.g., a workflow). For example, workflow generator 116 may determine prompt information from the user. For instance, workflow generator 116 may receive prompt information indicating "generate a sales contract with XYZ company for 10,000 items.") Workflow generator 116 may generate metadata based on the utilization information for an agent (e.g., "Performs an identity verification (IDV) process"). In this example, workflow generator 116 may generate, with one or more machine learning models, the ordered list of agent assignments based on the prompt information and the metadata.

Workflow generator 116 may manage the workflow. For example, workflow generator 116 may determine that an agent is indicated in an ordered list of agent assignments. In this example, workflow generator may determine definition information for the agent, such as, for example, input parameters for the particular agent (e.g., type and/or a format of data). Based on the determination that the ordered list of agent assignments indicates the agent, workflow generator 116 may determine, based on the definition information for the agent, input data for the agent and cause the agent to generate output data based on the input data. For instance, workflow generator 116 may determine that definition information for an IDV agent indicates that a first name, middle name, and family name required as input and are required to be in a text format. In this instance, workflow generator 116 may provide the first name, middle name, and family name to the IDV agent, which may cause the IDV agent to validate an identity of the user. Workflow generator 116 may generate the executed document based on the output data. For example, the IDV agent may generate output data that includes an audit log proving validation of an identity of the signer. In this example, workflow generator 116 may use the validation of the signer to generate the executed document in response to receiving an indication of an electronic signature form the signer.

The techniques described herein may provide one or more technical advantages that realize one or more practical applications. For example, document management system 102 may provide an enhanced Accuracy. For instance, multi-agent collaboration may help to ensure a comprehensive and accurate analysis of smart contracts. Document management system 102 may increase efficiency. For instance, multi-agent collaboration may help to automates time-consuming tasks, which may allow human experts to focus on higher-level decision-making. Document management system 102 may provide risk mitigation, which may help to proactively identify and address potential risks and compliance issues. Document management system 102 may provide scalability, which may allow for the agents to scale to manage a large volume of contracts across various domains.

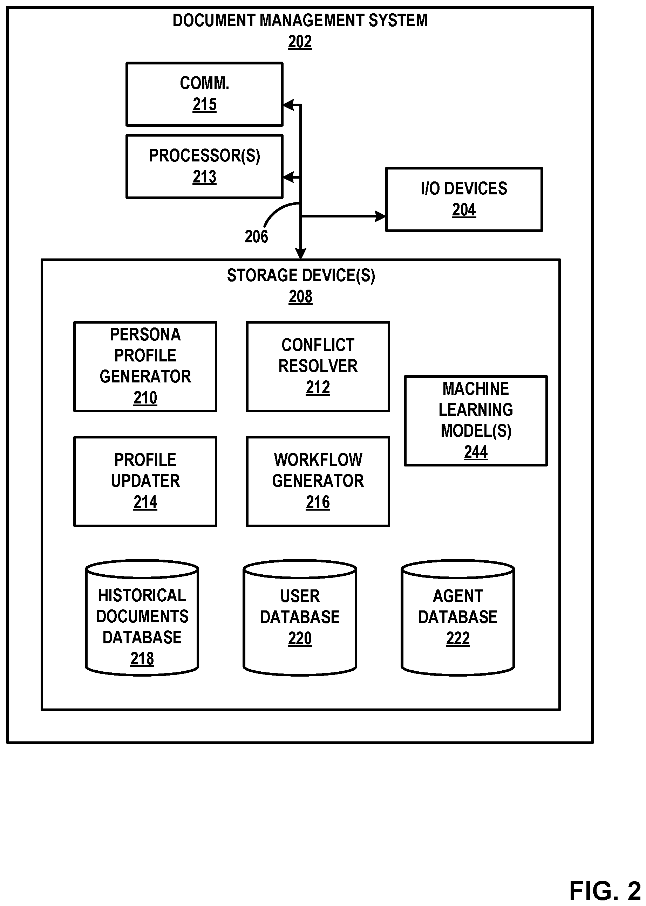

FIG. 2 is a block diagram illustrating an example document management system 202 for generating a counterparty profile for an electronic agreement, in accordance with techniques of this disclosure. Document management system 202 includes communication units 215, one or more processors 213, input/output (I/O) devices 204, one or more storage devices 208, and communication channels 206. FIG. 2 illustrates only one particular example of document management system 202, and many other examples of document management systems may be used in other instances and may include a subset of components included in example document management system 202 or may include additional components not shown in FIG. 2. For example, functionality of processors 213, communication units 215, I/O devices 204, and/or storage devices 208 may be distributed across multiple computing devices within a cloud-based environment provided by document management system 202.

Communication channels 206 may interconnect each of the components 215, 213, 204, and 208 for inter-component communications (e.g., physically, communicatively, and/or operatively). In some examples, communication channel 206 may include a system bus, a network connection, an inter-process communication data structure, or any other method for communicating data. Communication units 215 of document management system 202 may communicate with one or more external devices via one or more wired and/or wireless networks by transmitting and/or receiving network signals on the one or more networks. Examples of communication units 215 include a network interface card (e.g., such as an Ethernet card), an optical transceiver, a radio frequency transceiver, a GNSS receiver, or any other type of device that can send and/or receive information. Other examples of communication units 215 may include short wave radios, cellular data radios (for terrestrial and/or satellite cellular networks), wireless network radios, as well as universal serial bus (USB) controllers.

One or more input devices of I/O devices 204 may represent any input devices of document management system 202 not otherwise separately described herein. Input devices of I/O devices 204 may generate, receive, and/or process input. For example, one or more input devices of I/O devices 204 may generate or receive input from a network, a user input device, or any other type of device for detecting input from a human or machine.

One or more output devices of I/O devices 204 may represent any output devices of document management system 202 not otherwise separately described herein. Output devices of I/O devices 204 may generate, present, and/or process output. For example, one or more output devices of I/O devices 204 may generate, present, and/or process output in any form. Output devices of I/O devices 204 may include one or more universal serial bus (USB) interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

Processors 213 may include processing circuitry for implementing functionality and/or execute instructions within document management system 202. For example, processors 213 may receive and execute instructions to generate a counterparty profile. These instructions executed by processors 213 may cause document management system 202 to store and/or modify information within storage devices 208 or processors 213 during program execution. Processors 213 may execute instructions of clause correlator 232, difference information generator 234, counterparty profile generator 212, clause success estimator 238, counterparty insight generator 240. In some instances, processors 213 may include processing circuitry associated with cloud computing processing components (e.g., distributed processors across a cloud computing system).

Storage devices 208 may further include historical documents database 216 and clause database 242. Historical documents database 216 may store historical documents, such as, for example, executed agreements (e.g., electronic contracts) and/or unexecuted documents (e.g., rejected agreement documents). User database 220 may include a role (e.g., legal, technical, or finance) for each user. In some examples, user database 220 may include a playbook for an entity (e.g., a deployed playbook and previous instances of the playbook). User database 220 may include one or more of a prior conversation transcript (e.g., prior queries and/or response with workflow generator 216), personal preferences for each user, or an aggregated personal profile for each user. Personal preferences may include user-defined preferences. The aggregated personal profile for a user may include one or more of a role at an entity of the user (e.g., a company title and/or persona), system usage information (e.g., flight information for previous flights taken by the user), or feedback from the user (e.g., user provided indications that previous suggestions where approved or rejected). Agent database 222 may include rules for resolving conflicts for an entity. In some examples, agent database 222 may include definition information. Definition information may include, for example, one or more of a tool identifier (ID), utilization information, input parameters, or output parameters. Input parameters may include, for example, one or more of mandatory input parameter(s), optional input parameter(s), or respective data format for the mandatory/optional input parameter(s). Output parameters may include, for example, one or more of an indication of a subsequent agent (e.g., a tool ID), mandatory output parameter(s), optional output parameter(s), or respective data format for the mandatory/optional output parameter(s). Agent database 222 may store a profile for each agent and an indication of source data for each agent.

One or more machine learning models 244, (also referred to herein as simply "machine learning model 244") may include one or more generative machine learning models and/or one or more traditional machine learning models. Examples of generative machine learning models may include, for example, transformer-based deep neural networks or large language models (LLMs). Generative machine learning models may be associated with natural language prompts, or simply "prompts." Examples of traditional machine learning models may include, for example, a rule-based machine learning model or a deterministic machine learning model. Traditional machine learning models may be associated with training data.

Machine learning model 244 may include a generative machine learning model configured to summarize revision information for an electronic document. Examples of a generative machine learning model may include encoder based models, decoder based models, or encoder/decoder based models. Examples of encoder based models may include, for example, a bidirectional encoder representations from transformers or "BERT" machine learning model, convolutional neural networks (CNNs), and/or recurrent neural networks (RNNs). Examples of decoder based models may include, for example, generative pre-trained transformers (GPT) models, variational autoencoders (VAEs), and/or generative adversarial networks (GANs). Examples of encoder/decoder based models may include, for example, a transformer encoder-decoder, such as a bidirectional (BERT-like) encoder and an autoregressive (GPT-like) decoder (e.g., BART), a Text-To-Text Transfer Transformer (T5) model, and/or large language models (LLMs). Machine learning model 244 may include a visualization tool model, such as, for example, Tensorboard^{™} or matplotlib^{™}).

In accordance with the techniques of the disclosure, persona profile generator 210 may summarize, with machine learning model 244, changes to historical documents of historical documents database 218. For example, persona profile generator 210 may generate a prompt instructing an encoder/decoder based model (e.g., BART) to summarize the changes to the historical documents. As used herein, historical documents may refer to any electronic document, including, for example, unexecuted versions of executed documents and/or unexecuted versions of documents that have not yet been executed (e.g., documents being negotiated or that are no longer being negotiated). Changes to historical documents may include one or more of a removal of content from a historical document of the plurality of historical documents or an addition of content to the historical document. In some examples, revision information may include, for example, one or more of edit information (e.g, redlines or lack of redlines), a number of modifications from a persona (e.g., human person or group of people) or time information (e.g., a time to execute). For instance, persona profile generator 210 may generate a prompt instructing an encoder/decoder based model (e.g., BART) to summarize the changes associated with a legal persona to the historical documents. Persona profile generator 210 may generate the prompt to include the changes and/or may provide the changes as a metaprompt to the encoder/decoder based model. In this example, persona profile generator 210 may generate, with machine learning model 244, the summary information using the prompt (and optionally a metaprompt). Persona profile generator 210 may determine the revision information as the summary information.

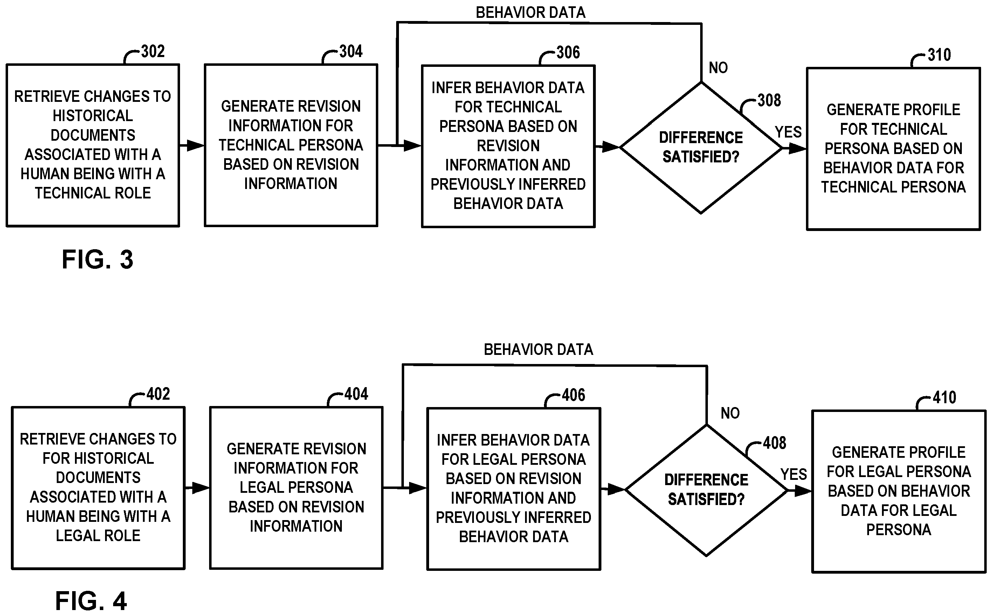

Persona profile generator 210 may generate a profile for the first persona based on the revision information. For example, persona profile generator 210 may infer, with machine learning model 244, behavior for a particular persona based on the summary information for the persona. For instance, persona profile generator 210 may generate a prompt that instructs a decoder based model to describe behavior from the summary information. Persona profile generator 210 may generate, with machine learning model 244, behavior information based on the prompt. Persona profile generator 210 may iteratively refine the behavior information until changes to the behavior information satisfy a threshold value. For example, persona profile generator 210 may feedback the behavior information (e.g., as a metaprompt or part of an updated prompt) with the summary of changes to generate refined behavior information (See. FIGS. 3-4). The process may continue until persona profile generator 210 determines that the threshold value is satisfied. For example, persona profile generator 210 may determine that the threshold value is satisfied in response to a determination that a difference in a number of content words of the behavior information and a number of content words of the revised behavior information is less than the threshold value. As used herein, content words may refer to words that possess semantic content and/or contribute to a meaning of content in an electronic document. For example, persona profile generator 210 may include nouns, verbs, and adjectives in the content count but omit function words (e.g., prepositions, pronouns, and/or conjunctions).

Persona profile generator 210 may generate an agent for a particular persona based on the profile and based on a set of historical documents of historical documents database 218. For example, persona profile generator 210 may generate a prompt that instructs machine learning model 244 to use the behavior information and the set of historical documents to generate feedback information to an electronic document. Persona profile generator 210 may filter historical documents from historical database 218 to include only historical documents associated with the persona of the profile. Persona profile generator 210 may generate the prompt to include the behavior information and/or may provide the behavior information as a metaprompt to machine learning model 244. Persona profile generator 210 may generate, with machine learning model 244, the feedback information based on the prompt.

Persona profile generator 210 may generate a multi-agent report with machine learning model 244. For example, persona profile generator 210 may generate a prompt to instruct a visualization tool model to generate the multi-agent report based on the feedback information for each persona. In some examples, may generate, with machine learning model 244, data for a user interface configured to display an indication of the multi-agent report a multi-agent report. For example, persona profile generator 210 may generate, with machine learning model 244, data for a graphical interface indicating key feedback features of the feedback information from the personas.

Conflict resolver 212 may generate an agent configured to resolve a conflict between feedback information from different personas. For example, conflict resolver 212 may summarize, with machine learning model 244, changes to a playbook. For example, conflict resolver 212 may generate a prompt instructing an encoder/decoder based model (e.g., BART) to summarize the changes to a currently deployed playbook and/or one or more previous versions of the playbook (e.g., instances of a playbook previously deployed or instances of the playbook that have not been deployed). Changes to playbook may include, for example, one or more of edit information (e.g, redlines and optionally a lack of redlines), or a number of modifications (e.g., from human person or group of people). For instance, conflict resolver 212 may generate a prompt instructing an encoder/decoder based model (e.g., BART) to summarize the changes to the playbook. Conflict resolver 212 may generate the prompt to include the changes and/or may provide the changes as a metaprompt to the encoder/decoder based model. In this example, conflict resolver 212 may generate, with machine learning model 244, the summary information using the prompt (and optionally a metaprompt). Conflict resolver 212 may determine the revision information as the summary information.

Conflict resolver 212 may generate a profile configured to resolve a conflict based on the revision information. For example, conflict resolver 212 may infer, with machine learning model 244, behavior for resolving a conflict based on the summary information for of the changes to the playbook. For instance, conflict resolver 212 may generate a prompt that instructs a decoder based model to describe behavior from the summary information. Conflict resolver 212 may generate, with machine learning model 244, behavior information based on the prompt. Conflict resolver 212 may iteratively refine the behavior information until changes to the behavior information satisfy a threshold value. For example, conflict resolver 212 may feedback the behavior information (e.g., as a metaprompt or part of an updated prompt) with the summary of changes to generate refined behavior information (See. FIGS. 3-4). The process may continue until conflict resolver 212 determines that the threshold value is satisfied. For example, conflict resolver 212 may determine that the threshold value is satisfied in response to a determination that a difference in a number of content words of the behavior information and a number of content words of the revised behavior information is less than the threshold value.

Conflict resolver 212 may generate the agent for resolving a conflict based on the profile for resolving conflicts and based on the playbook (e.g., a deployed playbook and one or more historical instances of the playbook). Conflict resolver 212 may determine, with machine learning model 244, a value that resolves a conflict based on the agent for resolving a conflict. For example, conflict resolver 212 may determine that the first feedback information for the first persona indicates a first value for an attribute of the electronic document that causes a conflict with second feedback information for a second persona. In response to the determination that the first feedback information for the first persona indicates the first value that causes the conflict, conflict resolver 212 may determine, with machine learning model 244, a value that resolves the conflict. For example, conflict resolver 212 may generate a prompt that instructs machine learning model 244 to use the behavior information for resolving conflicts and the playbook to select the first value or the second value for the attribute of the electronic document. Conflict resolver 212 may generate the prompt to include the behavior information for resolving conflicts and/or may provide the behavior information for resolving conflicts as a metaprompt to machine learning model 244. Conflict resolver 212 may generate, with machine learning model 244, the selected value based on the prompt. For instance, conflict resolver 212 may select the second value for the attribute of the electronic document instead of the first value based on an inferred behavior from the playbook that the first value is consistently rejected in revisions of the playbook while the second value has been frequently approved.

Profile updater 214 may determine, with machine learning model 244, vector embeddings for agents. For example, profile updater 214 may pre-train, with an unsupervised machine learning model, an encoder based on external data and source data for agents. Examples of an unsupervised machine learning model may include, traditional AI, such as, for example, one or more of classification, clustering, or regression machine learning models. For instance, profile updater 214 may pre-train the encoder to use vocabulary information associated with a persona (e.g., a law domain, a technical domain, a medical domain, or a patent domain) using external data source 104 of FIG. 1 (e.g, third party data). The vocabulary information may include, for example, one or more of byte-pair encoding (BPE), subwords, wordpieces, or TIKTOKEN. Profile updater 214 may generate, with the encoder, vector embeddings for one or more agents. The vector embeddings are configured to represent words and sentences (e.g., natural language) in a numerical representation that corresponds to a meaning and/or relationship between the words and sentences. Profile updater 214 may store the encoder in storage device 208, or more particularly, for example, agent database 222. In some examples, profile updater 214 may store the vector embeddings for agents generated with the encoder in storage device 208, or more particularly, for example, agent database 222.

Profile updater 214 may retrain the encoder. For example, profile updater 214 may retrieve a model for the encoder. In this example, profile updater 214 may retrain, with machine learning model 244, the model for the encoder with external data and source data for agents (e.g., newer data). Profile updater 214 may determine whether to retrain the encoder based on a schedule (e.g., retraining is seasonally triggered) and/or based on a data-driven signal. Examples of the data-driven signal may include, for example, one or more of trending information/news or social media posts (e.g., social media agent). In response to retraining the encoder, profile updater 214 may generate, with the retrained encoder, vector embeddings for agents. Profile updater 214 may store the re-trained encoder in storage device 208, or more particularly, for example, agent database 222. In some examples, profile updater 214 may store the vector embeddings for agents generated with the retrained encoder in storage device 208, or more particularly, for example, agent database 222.

Workflow generator 216 may generate an agent for a generating a workflow. For example, workflow generator 216 may determine definition information for agents from agent database 222. The definition information may include utilization information (e.g., natural language instructions) specifying examples for when to select a respective agent. In this example, workflow generator 216 may generate metadata (e.g., a metaprompt) based on the utilization information for each agent. In some examples, workflow generator 216 may generate the metadata based on one or more of the utilization information for each agent, user information from user database 220, or conversation history for a user from user database 220. Examples of user information may include, for example, personal preferences and/or a role of the user. Examples of conversation history for a user may include one or more previous queries or response received by workflow generator 216. Workflow generator 216 may generate a prompt that instructs a generative machine learning model to generate a workflow. Workflow generator 216 may generate, with machine learning model 244, the workflow based on the prompt and the metadata.

The techniques described herein may provide one or more technical advantages that realize one or more practical applications. For example, document management system 202 may provide improved machine learning models 244. For instance, generating agents for each respective persona using revision information may reduce a storage and/or processing burden on document management system 202 for generating feedback information compared to systems that generate a single agents for all personas and separately apply the single agent for each persona to generate the multi-agent report. Moreover, summarizing changes to generate feedback information may even further reduce a storage and/or processing burden on document management system 202 compared to systems that do not summarize changes. Generating revision information based on a determination that a difference between the first behavior data and the second behavior data satisfy a threshold, may even further reduce a storage and/or processing burden on document management system 202 compared to systems that do not iteratively refine revision information (e.g., behavior for a persona).

FIG. 3 is a conceptual flow chart illustrating an example process for generating a profile for a technical persona, in accordance with one or more techniques of this disclosure. FIG. 3 is discussed with FIGS. 1-2 for example purposes only. Persona profile generator 110 may retrieve changes to historical documents associated with a human being with a technical role (302). For example, persona profile generator 110 may determine that a first user is assigned a first persona associated with a technical personal. In this example, persona profile generator 110 may determine that each change of a first plurality of changes to a plurality of historical documents is associated with a first user (e.g., specified by the first user). Persona profile generator 110 may generate revision information for the technical persona based on the revision information (304). For example, persona profile generator 110 may generate, with machine learning model 244, summary information for the technical persona based on the first plurality of changes.

Persona profile generator 110 may infer behavior data for the technical persona based on the revision information and previous inferred behavior data (306). Persona profile generator 110 may determine whether the behavior data satisfies a threshold (308). For example, personal profile generator 110 may determine whether the difference between the first behavior data and the second behavior data satisfy the threshold based on a first number of content words of the first behavior data and a second number of content words of the second behavior data.

In response to determining that the difference threshold is not satisfied ("NO" of step 308), persona profile generator 110 may repeat step 306. For example, persona profile generator 110 may generate, with machine learning model 244, first behavior data for the technical persona based on the revision information. In this example, persona profile generator 110 may not have previous inferred behavior data. Persona profile generator 110 may determine that a difference of a content word count of the first behavior data and the previous inferred behavior data (e.g., a null set) does not satisfy the difference threshold. In this example, persona profile generator 110 may generate, with machine learning model 244, second behavior data for the technical persona based on the revision information and the first behavior data.

In response, however, to determining that the difference threshold is satisfied ("YES" of step 308), persona profile generator 110 may generate a profile for the technical persona based on the behavior data for the technical persona (310). For example, persona profile generator 110 may determine that a difference of a content word count of the first behavior data and the second behavior data satisfies the difference threshold (e.g., is less than a predefined threshold). In response to the determination that the second behavior data satisfies the difference threshold, personal profile generator 110 may set the behavior data to the second behavior data. For example, persona profile generator 110 may generate the profile for the technical persona to indicate the second behavior data describing the behavior of the technical persona that satisfied the difference threshold. In this example only two iterations resulted in satisfying the threshold, however, in other examples more than two iterations may performed to satisfy the threshold.

FIG. 4 is a conceptual flow chart illustrating an example process for generating a profile for a legal persona, in accordance with one or more techniques of this disclosure. FIG. 4 is discussed with FIGS. 1-3 for example purposes only. Persona profile generator 110 may retrieve changes to historical documents associated with a human being with a legal role (402). For example, persona profile generator 110 may determine that a second user is assigned a second persona associated with a legal personal. In this example, persona profile generator 110 may determine that each change of a second plurality of changes to a plurality of historical documents is associated with a second user (e.g., specified by the second user). Persona profile generator 110 may generate revision information for the legal persona based on the revision information (404). For example, persona profile generator 110 may generate, with machine learning model 244, summary information for the legal persona based on the second plurality of changes.

Persona profile generator 110 may infer behavior data for the legal persona based on the revision information and previous inferred behavior data (406). Persona profile generator 110 may determine whether the behavior data satisfies a threshold (408). In response to determining that the difference threshold is not satisfied ("NO" of step 408), persona profile generator 110 may repeat step 406. For example, persona profile generator 110 may generate, with machine learning model 244, first behavior data for the legal persona based on the revision information. In this example, persona profile generator 110 may not have previous inferred behavior data. Persona profile generator 110 may determine that a difference of a content word count of the first behavior data and the previous inferred behavior data (e.g., a null set) does not satisfy the difference threshold. In this example, persona profile generator 110 may generate, with machine learning model 244, second behavior data for the legal persona based on the revision information and the first behavior data.

In response, however, to determining that the difference threshold is satisfied ("YES" of step 408), persona profile generator 110 may generate a profile for the legal persona based on the behavior data for the legal persona (410). For example, persona profile generator 110 may determine that a difference of a content word count of the first behavior data and the second behavior data satisfies the difference threshold (e.g., is less than a predefined threshold). For example, persona profile generator 110 may generate the profile for the legal persona to indicate the second behavior data describing the behavior of the legal persona that satisfied the difference threshold. In this example only two iterations resulted in satisfying the threshold, however, in other examples more than two iterations may performed to satisfy the threshold.

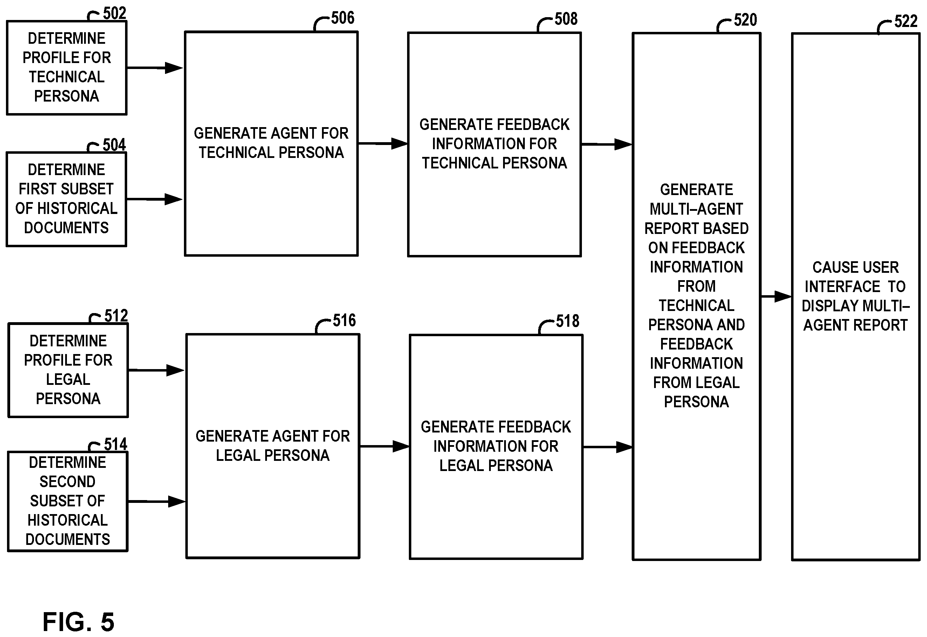

FIG. 5 is a conceptual flow chart illustrating an example process for generating a multi-agent report, in accordance with one or more techniques of this disclosure. FIG. 5 is discussed with FIGS. 1-4 for example purposes only.

Persona profile generator 110 may determine a profile for a technical persona (502). For example, persona profile generator 110 may perform the process of FIG. 3. Persona profile generator 110 may determine a first subset of historical documents (504). For example, persona profile generator 110 may include a particular historical document of historical documents stored in historical document database 118 based on a determination that the particular historical document is associated with the technical persona. For instance, persona profile generator 110 may determine that a historical document is associated with the technical persona based on an indication that a persona (e.g., a human user with a role corresponding to the persona or a software agent assigned to the persona) has reviewed the historical document (and optionally provided changes). In some instances, persona profile generator 110 may determine that a historical document is associated with the technical persona based on a determination that the historical document includes a document type (e.g., a sales contract, a human resources contract, or a lease) that is associated with the first persona. Persona profile generator 110 may generate an agent for the technical persona (506). For example, persona profile generator 110 may generate an agent for the technical persona based on the profile for the technical persona and based on a first subset of historical documents. For instance, persona profile generator 110 may generate a prompt and/or a metaprompt that instructs a machine learning model to use the agent for the technical persona and the first subset of historical documents to generate feedback information to an electronic document. Persona profile generator 110 may generate the feedback information for the technical persona (508). For example, persona profile generator 110, with the machine learning model, may generate the feedback information for the technical persona based on the prompt and/or metaprompt.

Similarly, persona profile generator 110 may determine a profile for a legal persona (512). For example, persona profile generator 110 may perform the process of FIG. 4. Persona profile generator 110 may determine a second subset of historical documents (514). For example, persona profile generator 110 may include a particular historical document of historical documents stored in historical document database 118 based on a determination that the particular historical document is associated with the legal persona. For instance, persona profile generator 110 may determine that a historical document is associated with the legal persona based on an indication that a persona (e.g., a human user with a role corresponding to the persona or a software agent assigned to the persona) has reviewed the historical document (and optionally provided changes). Persona profile generator 110 may generate an agent for the legal persona (516). For example, persona profile generator 110 may generate an agent for the legal persona based on the profile for the legal persona and based on the second subset of historical documents. For instance, persona profile generator 110 may generate a prompt and/or a metaprompt that instructs a machine learning model to use the agent for the legal persona and the second subset of historical documents to generate feedback information to an electronic document. Persona profile generator 110 may generate the feedback information for the legal persona (518). For example, persona profile generator 110, with the machine learning model, may generate the feedback information for the legal persona based on the prompt and/or metaprompt.

Persona profile generator 110 may generate a multi-agent report based on the feedback information for the technical persona and the feedback information for the legal persona (520). For example, persona profile generator 110 may generate data for a user interface configured to display an indication of the multi-agent report. Persona profile generator 110 may cause a user interface to display the muti-agent report (522). For example, persona profile generator 110 may output, to user device 108A, the data for the user interface to cause user device 108A to display the user interface configured to display the indication of the multi-agent report. While in the above example used the technical persona as a first persona and the legal persona as a second persona, in other examples, the first persona and/or the second persona may be different personas. For instance, the first persona may associated with legal analysis, financial review, or compliance checking.

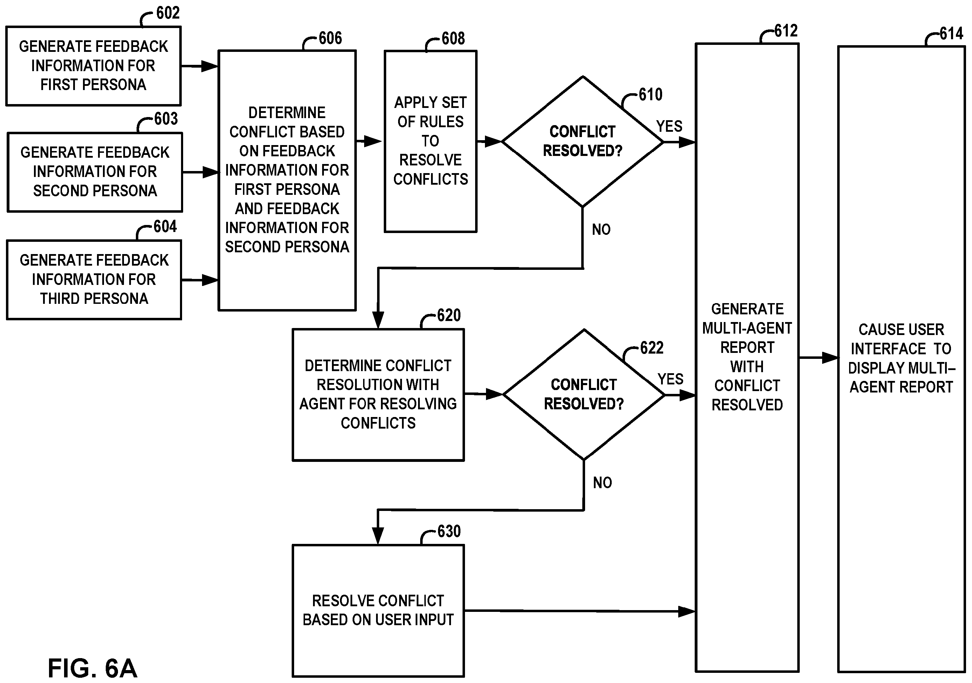

FIG. 6A is a conceptual flow chart illustrating an example process for resolving a conflict, in accordance with one or more techniques of this disclosure. FIG. 6A is discussed with FIGS. 1-5 for example purposes only. Conflict resolver 112 may generate feedback information for a first persona (602). For example, conflict resolver 112 may receive feedback information for a technical persona that was generated by persona profile generator 110 (e.g., in steps 502-508 of FIG. 5). Conflict resolver 112 may generate feedback information for a second persona (603). For example, conflict resolver 112 may receive feedback information for a legal persona that was generated by persona profile generator 110 (e.g, in steps 512-518 of FIG. 5). Conflict resolver 112 may generate feedback information for a third persona (604). For example, conflict resolver 112 may receive feedback information for a financial persona that was generated by persona profile generator 110.

Conflict resolver 112 may determine a conflict based on feedback information for a first persona and feedback information for a second persona (606). For example, conflict resolver 112 may determine a conflict based on a determination that the feedback information for the first persona indicates a first value for an attribute of the electronic document that causes a conflict with the second feedback information for the second persona. In the example of FIG. 6A, conflict resolver 112 may apply a set of rules to resolve conflicts (608). For example, conflict resolver 112 may apply a rule of the set of rules that indicates to select the second value for the attribute when feedback information indicates a conflict between the first value and the second value. For instance, the second value may represent a standard value (e.g., a standard jurisdiction) and the first value may represent a fallback value or undesired value.

Conflict resolver 112 may determine whether the conflict is resolved (610). For example, conflict resolver 112 may determine that the conflict is resolved in response to determining that the set of rules indicate a value to select in response to the conflict. In response to a determination that the conflict is resolved ("YES" of step 610), conflict resolver 112 may generate a multi-agent report with the conflict resolved (612). For example, conflict resolver 112 may generate the multi-agent report to indicate the second value for the attribute when the conflict is resolved to select the second value. Conflict resolver 112 may generate data for a user interface configured to display an indication of the multi-agent report. In the example of FIG. 6A, conflict resolver 112 may cause a user interface to display the multi-agent report (614). For example, persona profile generator 110 may output, to user device 108A, the data for the user interface to cause user device 108A to display the user interface configured to display the indication of the multi-agent report.

In response, however, to determination that the conflict is not resolved ("NO" of step 610), conflict resolver 112 may determine a conflict resolution with an agent for resolving conflicts (620). For example, conflict resolver 112 may generate a prompt that instructs a machine learning model to use an agent for resolving conflicts to select the first value or the second value for the attribute of the electronic document. In some examples, conflict resolver 112 may generate the agent for resolving conflicts as described in FIG. 2. Conflict resolver 112 may determine whether the conflict is resolved (622). For example, conflict resolver 112 may determine that the conflict is resolved based on an output from the agent for resolving conflicts. In response to a determination that the conflict is resolved ("YES" of step 622), conflict resolver 112 may proceed to step 612 as described above.

In response, however, to determination that the conflict is not resolved ("NO" of step 622), conflict resolver 112 may resolve the conflict based on a user input (e.g., user input data) (630). For example, conflict resolver 112 may generate data for a user interface configured to select a value to resolve the conflict from a user interaction. In this example, conflict resolver 112 may output, to user device 108A, the data for the user interface to cause user device 108A to display the user interface configured to select a value to resolve the conflict from a user interaction. In response to resolving the conflict based on user input, conflict resolver 112 may proceed to step 612 as described above.

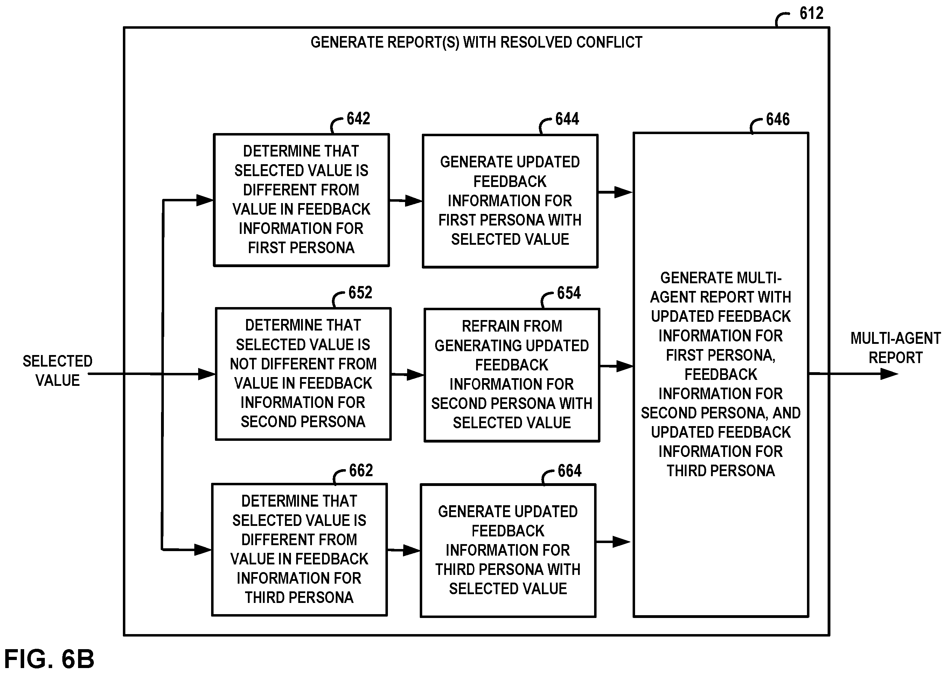

FIG. 6B is a conceptual flow chart illustrating an example process for generating updated feedback information, in accordance with one or more techniques of this disclosure. FIG. 6B is discussed with FIGS. 1-5, 6A for example purposes only. In the example of FIG. 6B, conflict resolver 112 determine a select a value for an attribute of an electronic document to resolve a conflict. For example, conflict resolver 112 may resolve a conflict based on a set of rules to resolve conflicts, an agent for resolving conflicts, or a user input (e.g., user input data) indicating the selected value.

Conflict resolver 112 may determine that the selected value is difference from a value in feedback information for a first persona (642). For example, conflict resolver 112 may determine that the selected value is a second value and that the feedback information for a first persona indicates the first value. In this example, conflict resolver 112 may generate updated feedback information for the first persona with the selected value (644). For example, conflict resolver 112 may generate, based on a first agent for the first persona, the selected value for the attribute, and the content of the electronic document, updated first feedback information for the first persona. In contrast, conflict resolver 112 may determine that the selected value is not difference from a value in feedback information for a second persona (652). For example, conflict resolver 112 may determine that the selected value is a second value and that the feedback information for the second persona indicates the second value. In this example, conflict resolver 112 may refrain from generating updated feedback information for the second persona with the selected value (654).

Conflict resolver 112 may determine that the selected value is different from a value in feedback information for a third persona (662). For example, conflict resolver 112 may determine that the selected value is a second value and that the feedback information for a third persona indicates the first value or a third value. For instance, conflict resolver 112 may determine that the selected value indicates a California jurisdiction value of a jurisdiction attribute of an electronic document and that the feedback information for a third persona indicates a Massachusetts jurisdiction value of the jurisdiction attribute. In this example, conflict resolver 112 may generate updated feedback information for the third persona with the selected value (664). For example, conflict resolver 112 may generate, based on a third agent for the third persona, the selected value for the attribute, and the content of the electronic document, updated third feedback information for the third persona. While the example of FIG. 6B included three agents, conflict resolver 112 may determine whether the selected value is different from a value in feedback information and/or generate updated feedback information (e.g., repeat steps 642, 644 or steps 652 and 654) for less than three agents (e.g., two agents) or more than three agents.

Conflict resolver 112 may generate a multi-agent report with updated feedback information for the first person, feedback information for the second persona, and updated third feedback information for the third persona (646). For example, conflict resolver 112 may generate data for a user interface configured to display an indication of the multi-agent report. In the example of FIG. 6A, the process may continue to step 614 of FIG. 6A. For example, persona profile generator 110 may output, to user device 108A, the data for the user interface to cause user device 108A to display the user interface configured to display the indication of the multi-agent report.

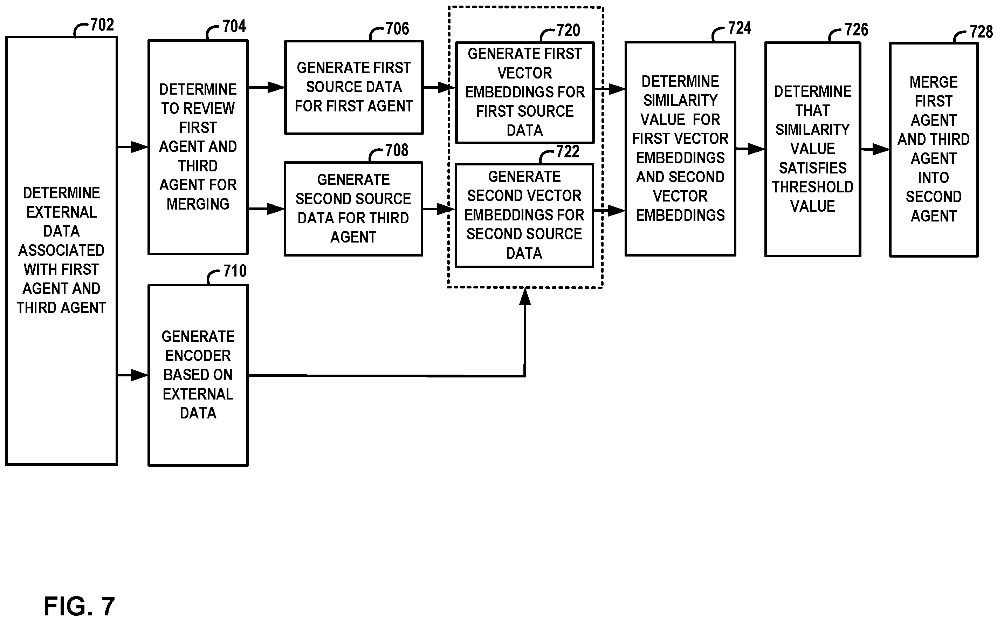

FIG. 7 is a conceptual flow chart illustrating an example process for merging agents, in accordance with one or more techniques of this disclosure. FIG. 7 is discussed with FIGS. 1-5, 6A, 6B for example purposes only. In the example of FIG. 7, a first agent may be for a first persona, a second agent may be for a second persona, and a third agent may be for a third persona. In this example, the first persona may be associated with a first portion of a combined role, the second persona may be associated with the combined role, and the third persona may be associated with a second portion of the combined role. For instance, the first persona may be associated with a buyer of the realtor role, the second persona may be associated with the realtor role, and the third persona may be associated with a seller of the realtor role.

Profile updater 114 may determine external data associated with a first agent and a third agent (702). In response to a determination that a schedule indicates to determine the external data or that an event has occurred, profile updater 114 may determine externa data from external data sources 104 that is associated with the first agent and the third agent. For instance, profile updater 114 may retrieve news releases of laws associated with legal documents for a legal agent. In some instances, profile updater 114 may retrieve technical papers associated with technical documents for a technical agent.

In the example of FIG. 7, profile updater 114 may determine to review the first agent and the third agent for merging (704). For example, profile updater 114 may apply one or more predefined rules that specify that the first agent and the third agent are to be reviewed for merging based criteria being satisfied. In this example, profile updater 114 may generate first source data for a first agent (706). For instance, profile updater 114 may retrieve the first source data from agent database 222 of FIG. 2. Similarly, profile updater 114 may generate second source data for the third agent (708). For instance, profile updater 114 may retrieve the second source data from agent database 222.

Profile updater 114 may generate an encoder based on the external data (710). For example, profile updater 114 may retrain, with a machine learning model, the model for the encoder with the external data, the first source data, and the second source data and source data for zero or more agents. Profile updater 114 may determine whether to initiate the generation of the encoder based on the external data. For example, profile updater 114 may determine to initiate the generation of the encoder (e.g., retrain the encoder) when the external data changes vocabulary information for the encoder from previously applied vocabulary information. In this example, profile updater 114 may generate first vector embeddings for the first source data (720) and generate second vector embeddings for the second source data (722). For example, profile updater 114 may generate, with the retrained encoder, the first vector embeddings for the first source data and may generate, with the retrained encoder, the second vector embeddings for the second source data. Profile updater 114 may map the first vector embeddings to the first source data. Similarly, profile updater 114 may map the second vector embeddings to the second source data.

In this example, profile updater 114 may determine a similarity value for the first vector embeddings and the second vector embeddings (724). For example, profile updater 114 may determine a cosine similarity value between the first vector embeddings and the second vector embeddings. In some examples, profile updater 114 may determine a Euclidean distance value between the first vector embeddings and the second vector embeddings. Profile updater 114 may determine that the similarity value satisfies a threshold value (726). For example, profile updater 114 may determine that the cosine similarity value is greater than a threshold value for merging agents. In some examples, profile updater 112 may determine that the Euclidean distance value is less than a threshold value for merging agents.

In response to the determination that the similarity value satisfies the threshold value, profile updater 114 may merge the first agent and the third agent into a second agent (728). Profile updater 112 may generate one or more of the first agent, the second agent, and the third agent using one or more steps of the process described in FIGS. 3-5. For example, profile updater 114, with persona profile generator 110, may determine that each change of a second plurality of changes to historical documents is associated with one or more users and that each user of the one or more users is associated with the second persona. In this instance, persona profile generator 110 may generate the second agent for the second persona based on the first source data and the second source data and the second plurality of changes. For instance, persona profile generator 110 may generate the second agent for a combined role based on the first source data for the first portion of the role, the second source data for the second portion of the role, and the second plurality of changes for the combined role persona. In contrast, persona profile generator 110 may have previously generated the first agent for the first portion of the combined role based on the first source data for the first portion of the role without the second source data for the second portion of the role and a first plurality of changes for only the first portion of the combined role persona. For instance, profile updater 114, with persona profile generator 110, may generate a realtor agent for the realtor persona combining both a buyer realtor persona and a seller realtor persona.

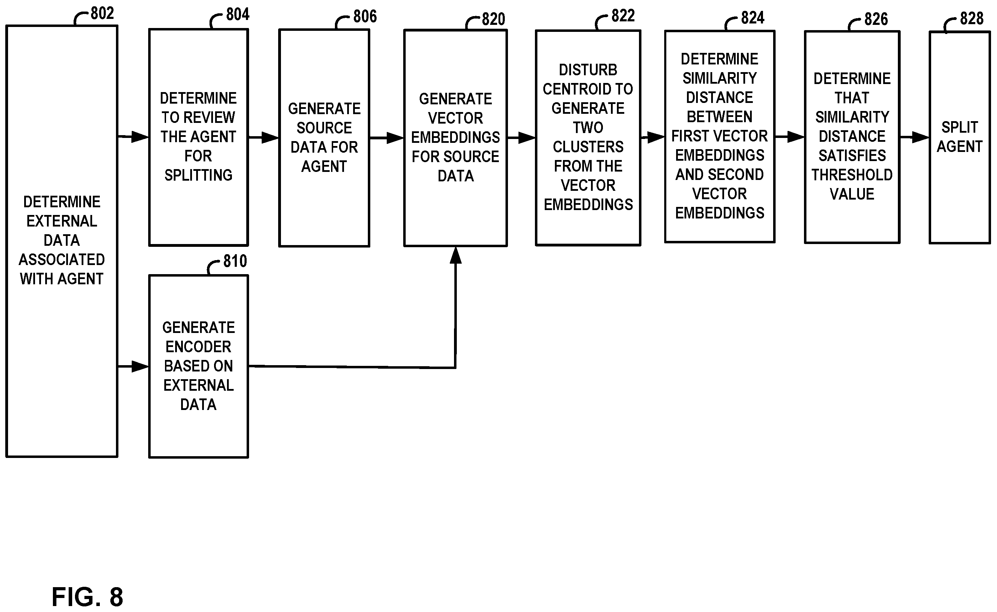

FIG. 8 is a conceptual flow chart illustrating an example process for splitting agents, in accordance with one or more techniques of this disclosure. FIG. 8 is discussed with FIGS. 1-5, 6A, 6B, 7 for example purposes only. In the example of FIG. 8, a first agent (also referred to as simply "agent") may be for a first persona, a second agent may be for a second persona, and a third agent may be for a third persona. In this example, the first persona may be associated with a combined role, the second persona may be associated with a first portion of the combined role, and the third persona may be associated with a second portion of the combined role. For instance, the first persona may be associated with a realtor role, the second persona may be associated with a buyer of the realtor role, and the third persona may be associated with a seller of the realtor role.

In the example of FIG. 8, profile updater 114 may determine external data associated with an agent (802). For example, in response to a determination that a schedule indicates to determine the external data or that an event has occurred, profile updater 114 may determine externa data from external data sources 104 that is associated with the agent. In the example of FIG. 8, profile updater 114 may determine to review the agent for splitting (804). For example, profile updater 114 may apply one or more predefined rules that specify that the agent is to be reviewed for splitting based criteria being satisfied. In this example, profile updater 114 may generate source data for the agent (806). For instance, profile updater 114 may retrieve the source data from agent database 222 of FIG. 2.

Profile updater 114 may generate an encoder based on the external data (810). For example, profile updater 114 may retrain, with a machine learning model, the model for the encoder with the external data, the first source data, and the second source data and source data for zero or more agents. In this example, profile updater 114 may generate vector embeddings for the source data (820). For example, profile updater 114 may generate, with the retrained encoder, the vector embeddings for the source data. Profile updater 114 may disturb a centroid position to generate two clusters form the vector embeddings (822). For example, profile updater 114 may cluster, with one or more machine learning models, the vector embeddings. In this example, profile updater 114 may determine a centroid position for the cluster of the vector embeddings. Profile updater 114 may determine a set of random change value (e.g., a delta value). In this example, profile updater 114 may disturb the centroid position by adding and/or subtracting each random change value of the set of random change values to the centroid position to identify two clusters from the cluster of vector embeddings.

Profile updater 114 may determine a similarity distance between first vector embeddings and second vector embeddings (824). Persona profile generator 110 may have previously generated the first agent for the combined role based on both the first source data for the first portion of the role and the second source data for the second portion of the role and a first plurality of changes for the combined role persona. In this example, profile updater 114 may determine a cosine similarity value between the first vector embeddings and the second vector embeddings. In some examples, profile updater 114 may determine a Euclidean distance value between the first vector embeddings and the second vector embeddings. Profile updater 114 may determine that the similarity value satisfies a threshold value (826). For example, profile updater 114 may determine that the cosine similarity value is less than a threshold value for splitting agents. In some examples, profile updater 112 may determine that the Euclidean distance value is greater than a threshold value for splitting agents. In response to the determination that the similarity value satisfies the threshold value, profile updater 114 may split the agent (828). For example, persona profile generator 110 may split the agent into a second agent and a third agent. For instance, profile updater 114 may split a realtor agent for a realtor persona into a buyer realtor agent for a buyer realtor persona and a seller realtor agent for a seller realtor persona.

Persona profile generator 110 may split the first agent into a second agent and a third agent using one or more steps of the process described in FIGS. 3-5. Profile updater 114 may determine first source data from the combined source data based on a mapping of the first vector embeddings to the first source data. Similarly, profile updater 114 may determine second source data from the combined source data based on a mapping of the second vector embeddings to the second source data. Profile updater 114 may split the first plurality of changes performed by the combined role into a second plurality of changes performed by a first portion of the combined role and a third plurality of changes performed by a second portion of the combined role. For example, profile updater 114 may have previously generated the first agent for a first persona (e.g., for the combined role) based on both the first plurality of changes and first source data and based further on the second source data.

Profile updater 114, with persona profile generator 110, may generate the second agent for the second persona based on the first source data and based further on the second plurality of changes. For example, profile updater 114 may determine that each change of a second plurality of changes to historical documents is associated with one or more users and that each user of the one or more users is associated with the second persona. The second plurality of changes may omit one or more changes performed by the third persona associated with the third agent. In this example, persona profile generator 110 may generate the second agent for the second persona based on the first source data (and not the second source data) and the second plurality of changes. Similarly, profile updater 114 may determine that each change of a third plurality of changes to historical documents is associated with one or more users and that each user of the one or more users is associated with the third persona. The third plurality of changes may omit one or more changes performed by the second persona associated with the second agent. In this instance, persona profile generator 110 may generate the third agent for the third persona based on the second source data (and not the first source data) and the third plurality of changes.

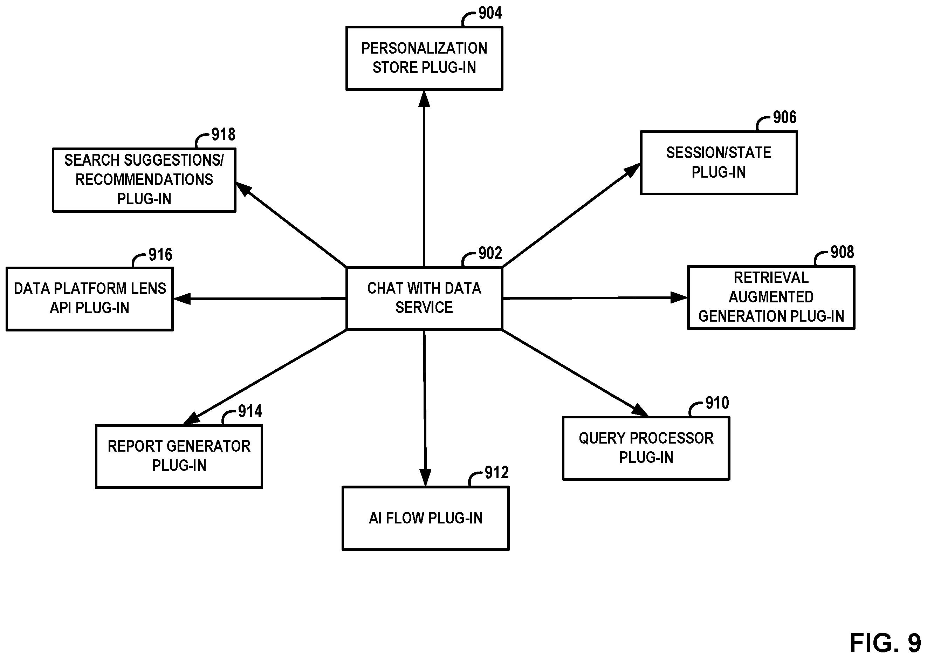

FIG. 9 is a conceptual flow chart illustrating example agents for a workflow, in accordance with one or more techniques of this disclosure. FIG. 9 is discussed with FIGS. 1-5, 6A, 6B, 7-8 for example purposes only. In the example of FIG. 9, workflow generator 116 may provide chat with data service 902. In this example, chat with data service 902 may generate a workflow using one or more of a personalization store plug-in 904, a session/state plug-in 906, a retrieval augmented generation plug-in 908, a query processor plug-in 910, an AI flow plug-in 912, a report generator plug-in 914, data platform lens API plug-in 916, and search suggestions/recommendations plug-in 918. As described further herein, each agent (e.g., plug-in) may be associated with definition information, such as, for example, utilization information in natural language. In some examples, agents may include, for example, a machine learning agent, a natural understanding agent, an agent for a persona, an identification verification (IDV) agent, or an electronic execution agent. In this way, workflow generator 116 may proactively build a workflow using the available agents (e.g., plug-ins).

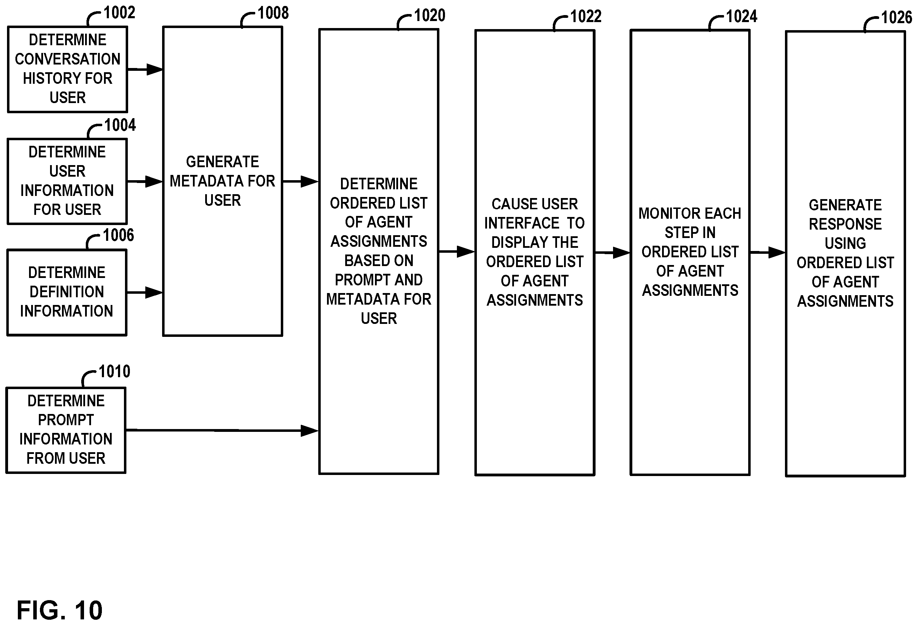

FIG. 10 is a conceptual flow chart illustrating an example process for managing a workflow, in accordance with one or more techniques of this disclosure. FIG. 10 is discussed with FIGS. 1-5, 6A, 6B, 7-9 for example purposes only.

Workflow generator 116 may determine conversation history for a user (1002). For example, workflow generator 116 may retrieve conversation history for a user from user database 220 of FIG. 2. Workflow generator 116 may determine user information for the user (1004). For example, workflow generator 116 may retrieve the user information for the user from user database 220. Workflow generator 116 may determine definition information (1006). For example, workflow generator 116 may retrieve definition information from agent database 222. An example of definition information is as follows.

```
 //tool definition
 {
  "id": "d4e7b1a0-9f5f-4c8b-8e6a-3e6f2d1f7e2a",
  "name": "Lexical Index Search Tool",
  "description": "Searches lexical index for a given query",
  "version": "1.0",
  "callContext": {
    "organization": "string",
    "environment": "string"
  },
  "parameters": [
     {
       "name": "parm1",
       "type": "string",
       "required": true
     },
     {
       "name": "parm2",
       "type": "datetime",
       "required": true
     },
     {
       "name": "parm3",
       "type": "number",
       "required": true
     }
  ],
  "sorting": {
    "name": "fieldName",
    "type": "string",
    "order": "string",
    "required": false
  },
  "securityRequirements": [
     {
       "type": "apiKey",
       "name": "Authorization",
       "description": "API key for authentication"
     }
  ],
  "response": {
    "type": "object",
    "name": "response",
    "required": false
 }
```

In the example of FIG. 10, workflow generator 116 may generate metadata for the user (1008). For example, workflow generator 116 may generate the metadata to indicate the definition information, the user information for the user, and the conversation history for the user. Workflow generator 116 may determine prompt information from the user (1010). For example, workflow generator 116 may receive the prompt information (e.g., a query or request) from user device 108A.

Workflow generator 116 may determine an ordered list of agent assignments based on the prompt and metadata for the suer (1020). For example, generate, with one or more machine learning models, the ordered list of agent assignments based on the prompt information and the metadata. Workflow generator 116 may cause a user interface to display the ordered list of agent assignments (1022). For example, workflow generator 116 may generate data for a user interface configured to display an indication of the workflow. In this example, workflow generator 116 may output, to user device 108A, the data for the user interface to cause user device 108A to display the user interface configured to display the indication of the workflow.

Workflow generator 116 may monitor each step in the ordered list of agent assignments (1024). For example, workflow generator 116 may determine whether each agent of the ordered list of agent assignments has generated output data. For instance, workflow generator 116 may determine that a particular agent of the ordered list has completed one or more actions based on a determination that the particular agent has generated output data. In this example, workflow generator 116 may generate workflow state data based on determining that the agent generated the output data. For instance, workflow generator 116 may generate workflow state data to indicate that the particular agent has completed one or more actions in response to a determination that the agent generated the output data. Workflow generator 116 may generate data for a user interface configured to display an indication of the workflow state data. In this example, workflow generator 116 may output, to user device 108A, the data for the user interface to cause user device 108A to display the user interface configured to display the indication of the workflow state data.

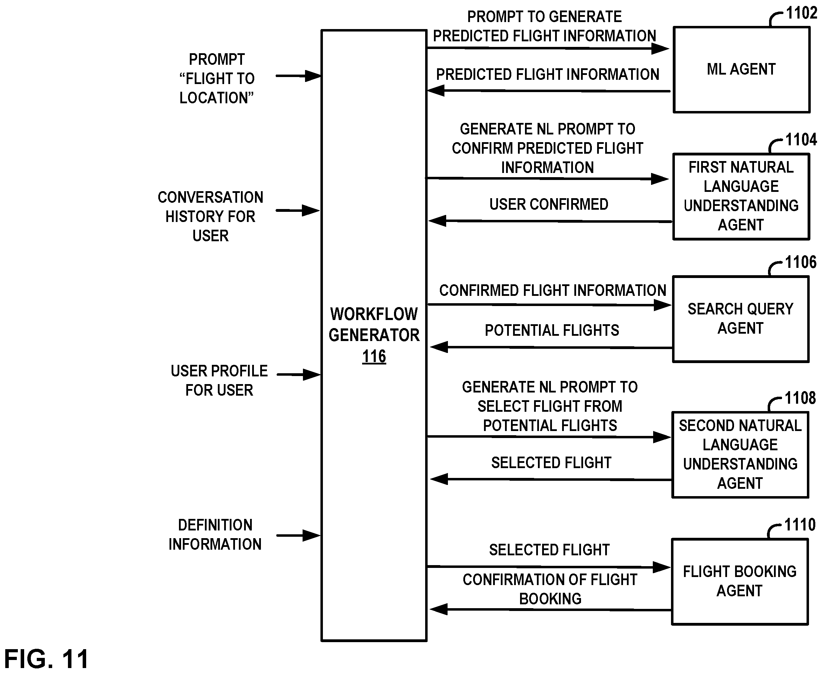

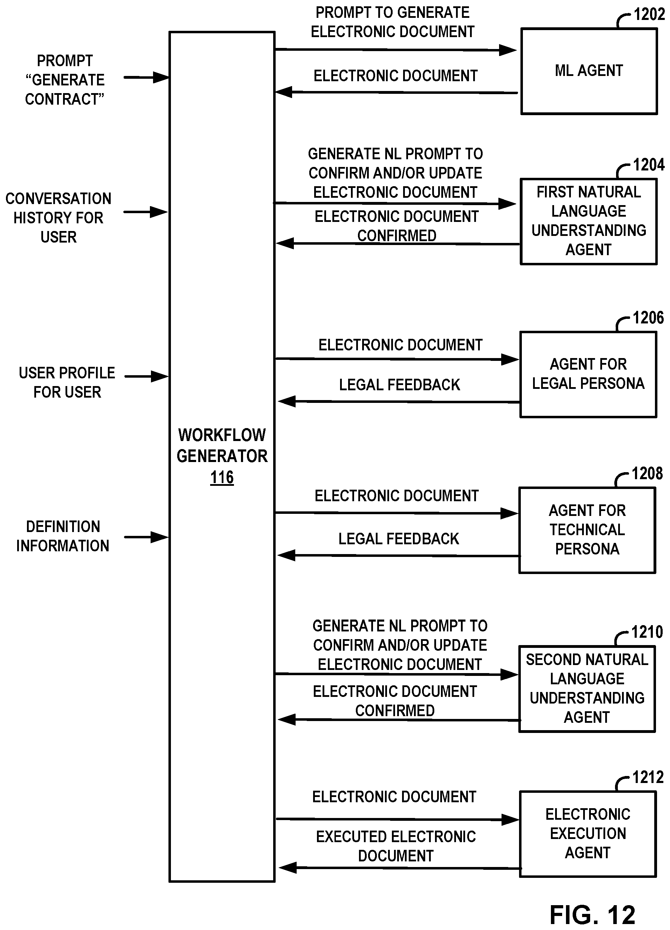

Workflow generator 116 may generate a response using the ordered list of agent assignments (1026). For example, workflow generator 116 may generate, with a final agent in the ordered list of agent assignments, a response to the prompt. For instance, the final agent may include an electronic execution agent configured to generate an executed document (see FIG. 12). In some instances, the final agent may include a report generator configured to generate a report indicating results of a query indicated in the prompt (see FIG. 11).

FIG. 11 is a conceptual flow chart illustrating an example process for executing a workflow for responding to a query, in accordance with one or more techniques of this disclosure. FIG. 11 is discussed with FIGS. 1-5, 6A, 6B, 7-10 for example purposes only.

In the example of FIG. 11, workflow generator 116 may receive prompt information "flight to location", conversation history for a user, a user profile for the user, and definition information for agents. In this example, workflow generator 116 may determine an ordered list of agent assignments (e.g., step 1020) that includes ML Agent 1102, first natural language understanding agent 1104, search query agent 1106, second natural language understanding agent 1108, and flight booking agent 1110.

Workflow generator 116 may generate a prompt to generate predicted flight information based on one or more of the prompt information "flight to location", conversation history for a user, a user profile for the user, and definition information for agents. In this example, ML agent 1102 may generate the predicted flight information. For instance, ML agent 1102 may generate the predicted flight information to indicate a starting airport based on the user profile, a preferred airline company based on the conversation history for the user, and a destination airport based on the user profile. In this example, workflow generator 116 may instruct first natural language understanding agent 1104 to generate a natural language (NL) prompt to confirm the predicted flight information. In response to determining that the user confirm the flight information, first natural language understanding agent 1104 may output an indication that the user confirmed the predicted flight information to workflow generator 116.

Workflow generator 116 may instruct search query agent 1106 to identify potential flights based on the predicted flight information. In response to the instructions to identify potential flights, search query agent 1106 may indicate one or more potential flights. In this example, workflow generator 116 may instruct second natural language understanding agent 1108 to generate a natural language (NL) prompt to select a flight from the one or more potential flights. In response to determining that the user selects a flight, second natural language understanding agent 1108 may output an indication of the selected flight to workflow generator 116. Workflow generator 116 may instruct flight booking agent 1110 to book the flight based on the selected flight. In this example, flight booking agent 1110 outputs a confirmation of the flight booking to workflow generator 116.

FIG. 12 is a conceptual flow chart illustrating an example process for executing a workflow for generating an executed document, in accordance with one or more techniques of this disclosure. FIG. 12 is discussed with FIGS. 1-5, 6A, 6B, 7-11 for example purposes only.

In the example of FIG. 12, workflow generator 116 may receive prompt information "generate contract", conversation history for a user, a user profile for the user, and definition information for agents. In this example, workflow generator 116 may determine an ordered list of agent assignments (e.g., step 1020) that includes ML Agent 1202, first natural language understanding agent 1204, agent for legal persona 1206, agent for technical persona 1208, second natural language understanding agent 1210, and electronic execution agent 1212.

Workflow generator 116 may generate a prompt to generate an electronic document based on one or more of the prompt information "generate contract", conversation history for a user, a user profile for the user, and definition information for agents. In this example, ML agent 1202 may generate the electronic document. For instance, ML agent 1202 may generate the electronic document to indicate a document type based on the user profile and one or more preferred values of attributes of the electronic document based on the conversation history for the user. In this example, workflow generator 116 may instruct first natural language understanding agent 1204 to generate a natural language (NL) prompt to confirm the electronic document and/or update the electronic document. In response to determining that the user confirmed the electronic document (with or without updates), first natural language understanding agent 1204 may output an indication that the user confirmed the electronic document to workflow generator 116.

Workflow generator 116 may instruct agent for legal persona 1206 to provide legal feedback and agent for technical persona 1208 to provide technical feedback. In response to the instructions, agent for legal persona 1206 may provide legal feedback and agent for technical persona 1208 may provide technical feedback. In this example, workflow generator 116 may instruct second natural language understanding agent 1210 to generate a natural language (NL) prompt to confirm the electronic document and/or update the electronic document. In response to determining that the user confirmed the electronic document (with or without updates), second natural language understanding agent 1210 may output an indication that the user confirmed the electronic document to workflow generator 116. In response to determining that the user confirmed the electronic document, workflow generator 116 may instruct electronic execution agent 1212 to generate an executed electronic document from the electronic document. For example, electronic execution agent 1212 may collect electronic signatures from signors (and optionally a notary) and generate the executed document and optionally an audit log.

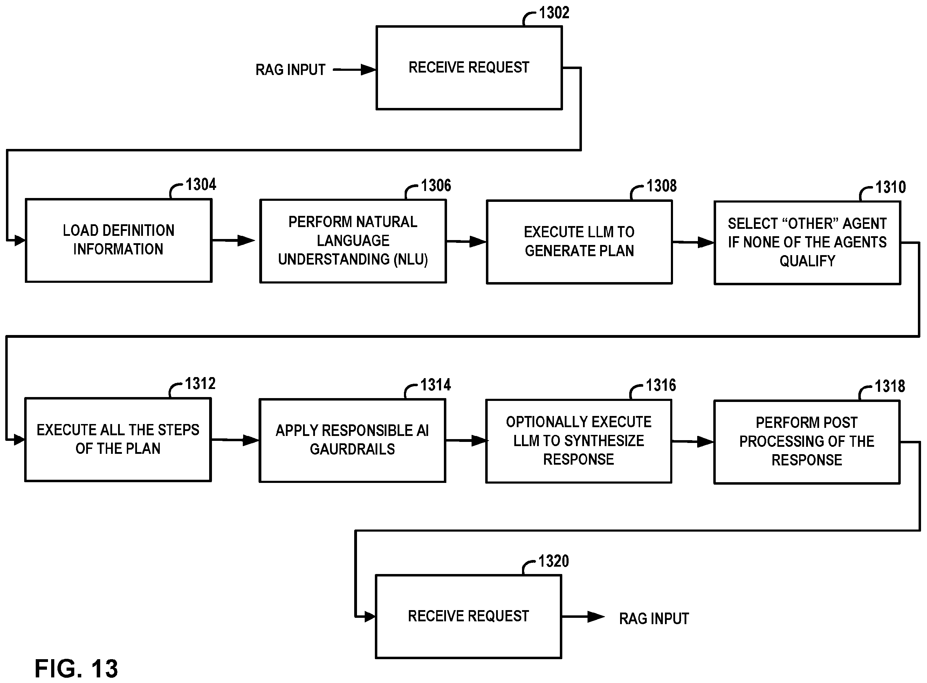

FIG. 13 is a conceptual flow chart illustrating example details for executing a workflow for responding to a request, in accordance with one or more techniques of this disclosure. FIG. 13 is discussed with FIGS. 1-5, 6A, 6B, 7-12 for example purposes only. Workflow generator 116 may receive a request (1302). As shown, the request may include a Retrieval-Augmented Generation (RAG) input. In this example, workflow generator 116 may load definition information (1304). Workflow generator 116 may perform natural language understanding (1306) and execute a large language model to generate a plan (1308). In this example, workflow generator 116 may select "other" agent if none of the agents qualify. Workflow generator 116 may execute all the steps of the plan (1312) and apply responsible AI guardrails (1314). Workflow generator 116 may optionally execute LLM to synthesize a response (1316). In this example, workflow generator 116 may perform post processing of the response (1318). Workflow generator 116 may receive another request and the process may repeat (1320).

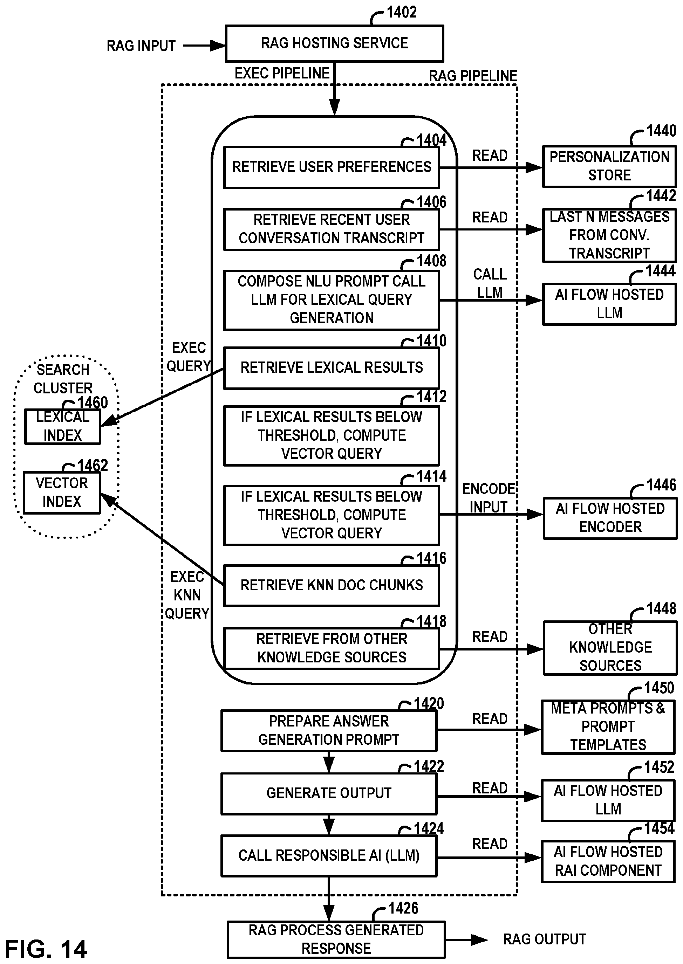

FIG. 14 is a conceptual flow chart illustrating example details for executing a workflow using a search cluster, in accordance with one or more techniques of this disclosure. FIG. 14 is discussed with FIGS. 1-5, 6A, 6B, 7-14 for example purposes only.

Workflow generator 116 may receive a request (1402). As shown, the request may include a RAG input. In the example of FIG. 14, workflow generator 116 may retrieve user preferences (1404) from personalization store 1440. Personalization store 1440 may be an example of part of or of user database 120 of FIG. 1. Workflow generator 116 may retrieve recent a user conversation transcript (1406) from the last 'N' messages from a conversation transcript 1442. Conversation transcript 1442 may be an example of part of or of user database 120 of FIG. 1. In this example, workflow generator 116 may compose a natural language understanding prompt call to a LLM for lexical query generation (1408) and call an AI flow hosted LLM 1414. AI flow hosted LLM 1414 may be an example machine learning model of one or more machine learning models 244.

Workflow generator 116 may retrieve lexical results (1410) from a lexical index 1460. Lexical index 1460 may be an example of part of or of agent database 222 of FIG. 2. If the lexical results are below a threshold, workflow generator 116 may compute a vector query (1412). If the lexical results are again below a threshold, workflow generator 116 may compute a vector query (1414) and encode an input to AI flow hosted encoder 1416. Workflow generator 116 may retrieve K-nearest neighbor (KNN) document chunks (1416) from vector index 1462. Workflow generator 116 may retrieve data from other knowledge sources 1448 (1418). Other knowledge sources 1448 may be an example of part of or of external data sources 104 of FIG. 1. In the example of FIG. 14, workflow generator 116 may prepare an answer generation prompt (1429) by reading other knowledge sources 1448. Workflow generator 116 may generate an output (1422) by reading an AI flow hosted LLM 1452 and call a responsible AI (LLM) (1424) by reading an AI flow hosted LLM 1454. In this example, workflow generator 116 outputs the RAG process generated response (1426).

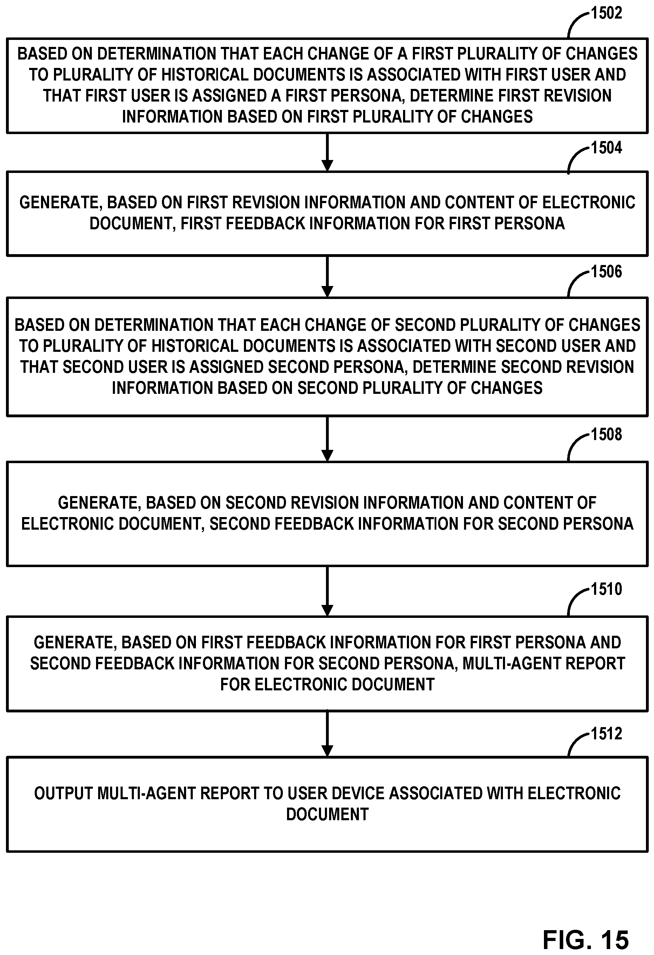

FIG. 15 is a flow chart illustrating an example process for generating multi-agent reports for electronic documents, in accordance with techniques of this disclosure. FIG. 15 is discussed with FIGS. 1-5, 6A, 6B, 7-14 for example purposes only. In the example of FIG. 15, persona profile generator 110 may, based on a determination that each change of a first plurality of changes to a plurality of historical documents is associated with a first user and that the first user is assigned a first persona, determine first revision information based on the first plurality of changes (1502). Persona profile generator 110 may generate, based on the first revision information and content of an electronic document, first feedback information for the first persona (1504). Persona profile generator 110 may, based on a determination that each change of a second plurality of changes to the plurality of historical documents is associated with a second user and that the second user is assigned a second persona, determine second revision information based on the second plurality of changes (1506). Persona profile generator 110 may generate, based on the second revision information and the content of the electronic document, second feedback information for the second persona (1508). Persona profile generator 110 may generate, based on the first feedback information for the first persona and the second feedback information for the second persona, a multi-agent report for the electronic document (1510). Persona profile generator 110 may output the multi-agent report to a user device associated with the electronic document (1512).

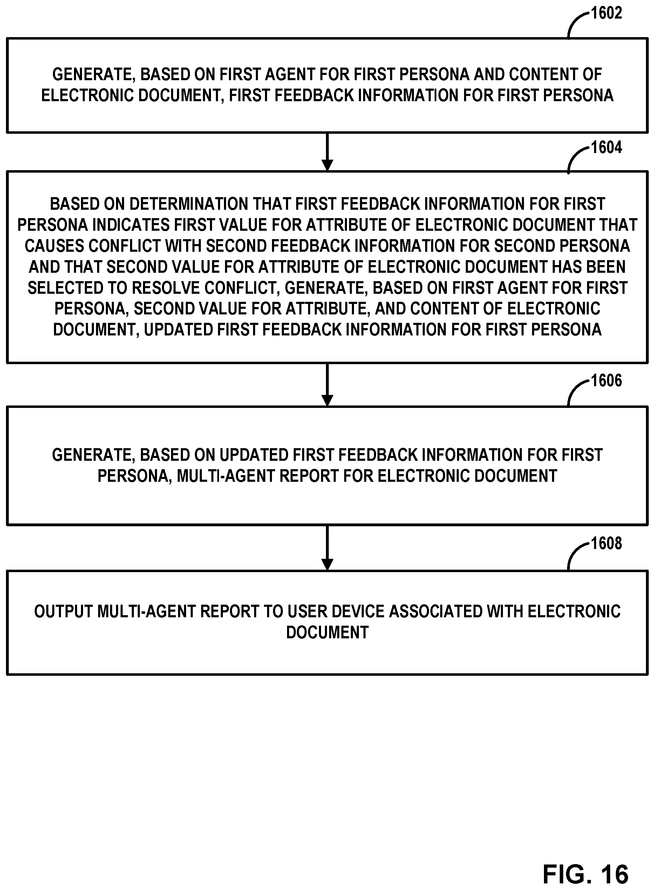

FIG. 16 is a flow chart illustrating an example process for resolving conflicts between agents for generating multi-agent reports for electronic documents, in accordance with techniques of this disclosure. FIG. 16 is discussed with FIGS. 1-5, 6A, 6B, 7-15 for example purposes only. In the example of FIG. 16, conflict resolver 112 may generate, based on a first agent for a first persona and content of an electronic document, first feedback information for the first persona (1602). Conflict resolver 112 may, based on a determination that the first feedback information for the first persona indicates a first value for an attribute of the electronic document that causes a conflict with second feedback information for a second persona and that a second value for the attribute of the electronic document has been selected to resolve the conflict, generate, based on the first agent for the first persona, the second value for the attribute, and the content of the electronic document, updated first feedback information for the first persona (1604). Conflict resolver 112 may generate, based on the updated first feedback information for the first persona, a multi-agent report for the electronic document (1606). Conflict resolver 112 may output the multi-agent report to a user device associated with the electronic document (1608).

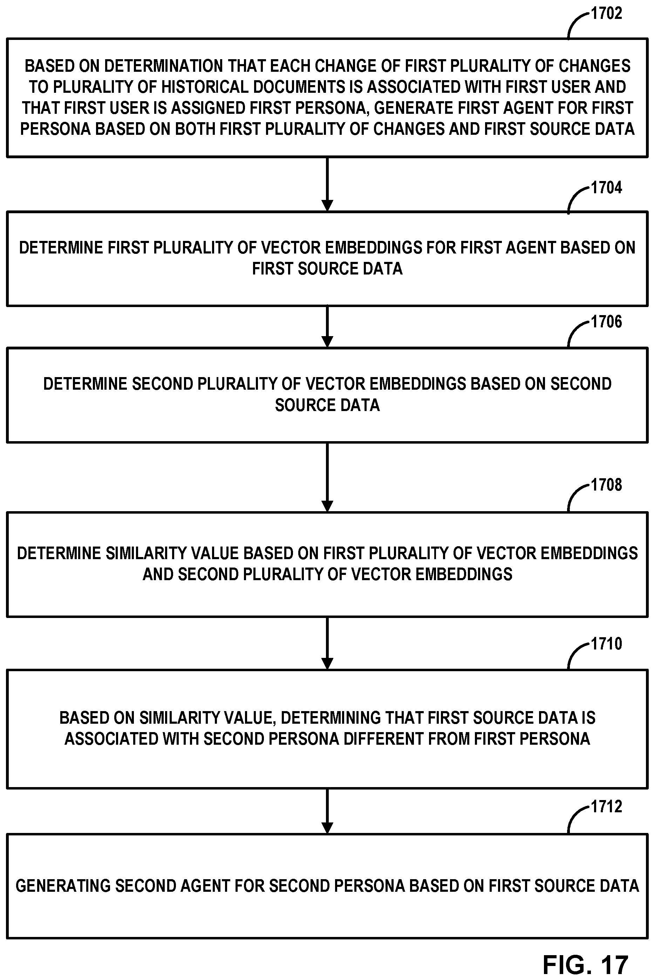

FIG. 17 is a flow chart illustrating an example process for managing agents providing feedback to electronic documents, in accordance with techniques of this disclosure. FIG. 17 is discussed with FIGS. 1-5, 6A, 6B, 7-16 for example purposes only. In the example of FIG. 17, a first agent may be for a first persona, a second agent may be for a second persona, and a third agent may be for a third persona. In some examples, the process of FIG. 17 may merge agents. For example, the first persona may be associated with a first portion of a combined role, the second persona may be associated with the combined role, and the third persona may be associated with a second portion of the combined role. For instance, the first persona may be associated with a buyer of the realtor role, the second persona may be associated with the realtor role, and the third persona may be associated with a seller of the realtor role. In some examples, however, the process of FIG. 17 may split agents. For example, the first persona may be associated with a combined role, the second persona may be associated with a first portion of the combined role, and the third persona may be associated with a second portion of the combined role. For instance, the first persona may be associated with a realtor role, the second persona may be associated with a buyer of the realtor role, and the third persona may be associated with a seller of the realtor role.

In the example of FIG. 17, profile updater 114 may, based on a determination that each change of a first plurality of changes to a first plurality of historical documents is associated with a first user and that the first user is assigned a first persona, generate a first agent for the first persona based on both the first plurality of changes and first source data (1702). Profile updater 114 may determine a first plurality of vector embeddings for the first agent based on the first source data (1704). Profile updater 114 may determine a second plurality of vector embeddings based on second source data (1706). Profile updater 114 may determine a similarity value based on the first plurality of vector embeddings and the second plurality of vector embeddings (1708). Profile updater 114 may, based on the similarity value, determine that the first source data is associated with a second persona different from the first persona (1710). For example, profile updater 114 may determine to merge the first agent with a third agent associated with the second source data to generate a second agent when the similarity value satisfies a threshold for merging. In some examples, profile updater 114 may determine to split a first agent that is associated with first source data and second source data into a second agent associated with the first source data and into a third agent associated with the second source data when the similarity value satisfies a threshold for splitting. Profile updater 114 may generate a second agent for the second persona based on the first source data (1712).

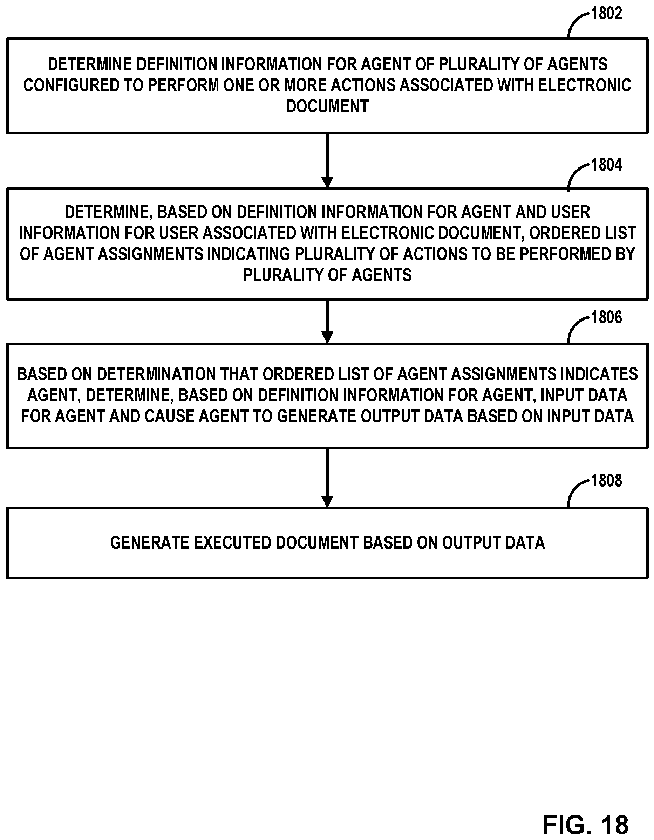

FIG. 18 is a flow chart illustrating an example process for generating multi-agent reports for electronic documents using an ordered list of agent assignments, in accordance with techniques of this disclosure. FIG. 18 is discussed with FIGS. 1-5, 6A, 6B, 7-17 for example purposes only.

Workflow generator 116 may determine definition information for an agent of a plurality of agents configured to perform one or more actions associated with an electronic document (1802). Workflow generator 116 may determine, based on the definition information for the agent and user information for a user associated with the electronic document, an ordered list of agent assignments indicating a plurality of actions to be performed by the plurality of agents (1804). Workflow generator 116 may, based on a determination that the ordered list of agent assignments indicates the agent, determine, based on the definition information for the agent, input data for the agent and cause the agent to generate output data based on the input data (1806). Workflow generator 116 may generate the executed document based on the output data (1808).

Like reference characters denote like elements throughout the text and figures.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing an understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects and/or embodiments of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:
Embodiment 1. A system for generating multi-agent reports for electronic documents, the system comprising:
   processing circuitry; and
   computer readable media comprising instructions that, when executed, cause the processing circuitry to:
      based on a determination that each change of a first plurality of changes to a plurality of historical documents is associated with a first user and that the first user is assigned a first persona, determine first revision information based on the first plurality of changes;
      generate, based on the first revision information and content of an electronic document, first feedback information for the first persona;
      based on a determination that each change of a second plurality of changes to the plurality of historical documents is associated with a second user and that the second user is assigned a second persona, determine second revision information based on the second plurality of changes; generate, based on the second revision information and the content of the electronic document, second feedback information for the second persona;
      generate, based on the first feedback information for the first persona and the second feedback information for the second persona, a multi-agent report for the electronic document; and output the multi-agent report.
Embodiment 2. The system of embodiment 1, wherein to generate the first feedback information for the first persona, the instructions cause the processing circuitry to: generate a profile for the first persona based on the first revision information;
   generate an agent for the first persona based on the profile for the first persona and based on a set of historical documents of the plurality of historical documents; and
   generate, with one or more machine learning models, the first feedback information for the first persona based on the agent for the first persona and the content of the electronic document.
Embodiment 3. The system of embodiment 2, wherein to generate the first feedback information for the first persona, the instructions cause the processing circuitry to: infer behavior data for the first persona based on the first revision information,
   wherein the instructions cause the processing circuitry to generate the profile based on the behavior data.
Embodiment 4. The system of embodiment 3, wherein to infer the behavior data for the first persona, the instructions cause the processing circuitry to:
   generate, with the one or more machine learning models, first behavior data for the first persona based on the first revision information;
   generate, with the one or more machine learning models, second behavior data for the first persona based on the first revision information and the first behavior data; and
   based on a determination that a difference between the first behavior data and the second behavior data satisfy a threshold, set the behavior data to the second behavior data.
Embodiment 5. The system of embodiment 4, wherein to infer the behavior data for the first persona, the instructions cause the processing circuitry to:
   determine that the difference between the first behavior data and the second behavior data satisfy the threshold based on a first number of content words of the first behavior data and a second number of content words of the second behavior data.
Embodiment 6. The system of any of embodiments 2 to 5, wherein to generate the first feedback information for the first persona, the instructions cause the processing circuitry to:
   based on a determination that a particular historical document of the plurality of historical documents includes a document type that is associated with the first persona, determine the set of historical documents to include the particular historical document.
Embodiment 7. The system of any of embodiments 1 to 6, wherein to determine the first revision information, the instructions cause the processing circuitry to:
   summarize, with one or more machine learning models, the first plurality of changes to the plurality of historical documents.
Embodiment 8. The system of any of embodiments 1 to 7, wherein the first persona comprises a legal persona, a technical persona, a financial persona, or a performance metrics persona.
Embodiment 9. The system of any of embodiments 1 to 8, wherein the instructions further cause the processing circuitry to:
   determine that a change of the plurality of changes is associated with the first user based on a determination that a user device associated with the first user indicates one or more of a removal of content from a historical document of the plurality of historical documents or an addition of content to the historical document.
Embodiment 10. The system of any of embodiments 1 to 9,
   wherein to generate the multi-agent report, the instructions cause the processing circuitry to generate data for a user interface configured to display an indication of the multi-agent report; and
   wherein to output the multi-agent report, the instructions further cause the processing circuitry to output, to a user device, the data for the user interface to cause the user device to display the user interface configured to display the indication of the multi-agent report.
Embodiment 11. A method for generating multi-agent reports for electronic documents, the method comprising:
   based on a determination that each change of a first plurality of changes to a plurality of historical documents is associated with a first user and that the first user is assigned a first persona, determining, by processing circuitry, first revision information based on the first plurality of changes;
   generating, by the processing circuitry and based on the first revision information and content of an electronic document, first feedback information for the first persona;
   based on a determination that each change of a second plurality of changes to the plurality of historical documents is associated with a second user and that the second user is assigned a second persona, determining, by the processing circuitry, second revision information based on the second plurality of changes;
   generating, by the processing circuitry and based on the second revision information and the content of the electronic document, second feedback information for the second persona;
   generating, by the processing circuitry and based on the first feedback information for the first persona and the second feedback information for the second persona, a multi-agent report for the electronic document; and
   outputting, by the processing circuitry, the multi-agent report.
Embodiment 12. The method of embodiment 11, wherein generating the first feedback information for the first persona comprises:
   generating a profile for the first persona based on the first revision information;
   generating an agent for the first persona based on the profile for the first persona and based on a set of historical documents of the plurality of historical documents; and
   generating, with one or more machine learning models, the first feedback information for the first persona based on the agent for the first persona and the content of the electronic document.
Embodiment 13. The method of embodiment 12, wherein generating the first feedback information for the first persona comprises:
   inferring behavior data for the first persona based on the first revision information,
   wherein generating the profile is based on the behavior data.
Embodiment 14. The method of embodiment 13, wherein inferring the behavior data for the first persona comprises:
   generating, with the one or more machine learning models, first behavior data for the first persona based on the first revision information;
   generating, with the one or more machine learning models, second behavior data for the first persona based on the first revision information and the first behavior data; and
   based on a determination that a difference between the first behavior data and the second behavior data satisfy a threshold, setting the behavior data to the second behavior data.
Embodiment 15. The method of embodiment 14, wherein to inferring the behavior data for the first persona comprises:
   determining that the difference between the first behavior data and the second behavior data satisfy the threshold based on a first number of content words of the first behavior data and a second number of content words of the second behavior data.
Embodiment 16. The method of embodiment 12, wherein generating the first feedback information for the first persona comprises:
   based on a determination that a particular historical document of the plurality of historical documents includes a document type that is associated with the first persona, determining the set of historical documents to include the particular historical document.
Embodiment 17. The method of any of embodiments 11 to 16, wherein determining the first revision information comprises:
   summarizing, with one or more machine learning models, the first plurality of changes to the plurality of historical documents.
Embodiment 18. The method of any of embodiments 11 to 17, wherein the first persona comprises a legal persona, a technical persona, a financial persona, or a performance metrics persona.
Embodiment 19. The method of any of embodiments 11 to 18, further comprising:
   determining, by the processing circuitry, that a change of the plurality of changes is associated with the first user based on a determination that a user device associated with the first user indicates one or more of a removal of content from a historical document of the plurality of historical documents or an addition of content to the historical document.
Embodiment 20. Computer-readable media encoded with instructions that, when executed, cause processing circuitry to:
   based on a determination that each change of a first plurality of changes to a plurality of historical documents is associated with a first user and that the first user is assigned a first persona, determine first revision information based on the first plurality of changes;
   generate, based on the first revision information and content of an electronic document, first feedback information for the first persona;
   based on a determination that each change of a second plurality of changes to the plurality of historical documents is associated with a second user and that the second user is assigned a second persona, determine second revision information based on the second plurality of changes;
   generate, based on the second revision information and the content of the electronic document, second feedback information for the second persona;
   generate, based on the first feedback information for the first persona and the second feedback information for the second persona, a multi-agent report for the electronic document; and
   output the multi-agent report.
Embodiment 21. A system for resolving conflicts between agents for generating multi-agent reports for electronic documents, the system comprising:
   processing circuitry; and
   computer readable media comprising instructions that, when executed, cause the processing circuitry to:
      generate, based on a first agent for a first persona and content of an electronic document, first feedback information for the first persona;
      based on a determination that the first feedback information for the first persona indicates a first value for an attribute of the electronic document that causes a conflict with second feedback information for a second persona and that a second value for the attribute of the electronic document has been selected to resolve the conflict, generate, based on the first agent for the first persona, the second value for the attribute, and the content of the electronic document, updated first feedback information for the first persona;
      generate, based on the updated first feedback information for the first persona, a multi-agent report for the electronic document; and
      output the multi-agent report.
Embodiment 22. The system of embodiment 21, wherein the instructions cause the processing circuitry to:
   determine the second value for the attribute of the electronic document to resolve the conflict based on a set of rules to resolve conflicts.
Embodiment 23. The system of embodiment 21 or 22, wherein the instructions cause the processing circuitry to:
   determine, with one or more machine learning models, the second value for the attribute of the electronic document to resolve the conflict based on an agent for resolving conflicts, the first value, and the second value.
Embodiment 24. The system of embodiment 23, wherein the instructions cause the processing circuitry to:
   determine whether a set of rules to resolve conflicts indicate a resolution to the conflict, wherein the instructions cause the processing circuitry to determine, with the one or more machine learning models, the second value to resolve the conflict based on the agent for resolving conflicts is in response to the determination that the set of rules do not indicate a resolution to the conflict.
Embodiment 25. The system of embodiment 23 or 24, wherein the instructions cause the processing circuitry to:
   generate a profile for resolving conflicts based on revision information of a rule of a plurality of playbook documents, the rule specifying a standard value for the attribute; and
   generate the agent for the resolving conflicts based on the profile for resolving conflicts and a set of playbook documents of the plurality of playbook documents.
Embodiment 26. The system of embodiment 25, wherein the instructions cause the processing circuitry to:
   based on a determination that a change to a playbook document of the plurality of playbook documents is associated with the attribute of the electronic document, determine the revision information based on the change.
Embodiment 27. The system of any of embodiments 21 to 26, wherein the instructions cause the processing circuitry to:
   receive, from a user device, a user input data; and
   determine the second value for the attribute of the electronic document to resolve the conflict based on the user input data received from the user device.
Embodiment 28. The system of any of embodiments 21 to 27, wherein the instructions cause the processing circuitry to:
   based on a determination that the second value for the attribute of the electronic document has been selected to resolve the conflict, generate, based on a third agent for a third persona, the second value for the attribute, and the content of the electronic document, third feedback information for the third agent,
   wherein the instructions cause the processing circuitry to generate the multi-agent report for the electronic document based on the updated first feedback information for the first persona and further based on the third feedback information for the third persona.
Embodiment 29. The system of any of embodiments 21 to 28, wherein the instructions cause the processing circuitry to:
   generate, based on a second agent for the second persona and the content of the electronic document, the second feedback information for the second persona,
   wherein the instructions cause the processing circuitry to generate the multi-agent report for the electronic document based on the updated first feedback information for the first persona and further based on the second feedback information for the second persona.
Embodiment 30. The system of any of embodiments 21 to 29, wherein the first persona comprises a legal persona, a technical persona, a financial persona, or a performance metrics persona.
Embodiment 31. The system of any of embodiments 21 to 30,
   wherein to generate the multi-agent report, the instructions cause the processing circuitry to generate data for a user interface configured to display an indication of the multi-agent report; and
   wherein to output the multi-agent report, the instructions further cause the processing circuitry to output, to a user device, the data for the user interface to cause the user device to display the user interface configured to display the indication of the multi-agent report.
Embodiment 32. A method for resolving conflicts between agents for generating multi-agent reports for electronic documents, the method comprising:
   generating, by processing circuitry and based on a first agent for a first persona and content of an electronic document, first feedback information for the first persona;
   based on a determination that the first feedback information for the first persona indicates a first value for an attribute of the electronic document that causes a conflict with second feedback information for a second persona and that a second value for the attribute of the electronic document has been selected to resolve the conflict, generating, by the processing circuitry and based on the first agent for the first persona, the second value for the attribute, and the content of the electronic document, updated first feedback information for the first persona;
   generating, by the processing circuitry and based on the updated first feedback information for the first persona, a multi-agent report for the electronic document; and
   outputting, by the processing circuitry, the multi-agent report.
Embodiment 33. The method of embodiment 32, further comprising:
   determining, by the processing circuitry, the second value for the attribute of the electronic document to resolve the conflict based on a set of rules to resolve conflicts.
Embodiment 34. The method of embodiment 32 or 33, further comprising: determining, by the processing circuitry and with one or more machine learning models, the second value for the attribute of the electronic document to resolve the conflict based on an agent for resolving conflicts, the first value, and the second value.
Embodiment 35. The method of embodiment 34, further comprising:
   determining, by the processing circuitry, whether a set of rules to resolve conflicts indicate a resolution to the conflict,
   wherein determining, with the one or more machine learning models, the second value to resolve the conflict based on the agent for resolving conflicts is in response to determining that the set of rules do not indicate a resolution to the conflict.
Embodiment 36. The method of embodiment 34 or 35, further comprising:
   generating, by the processing circuitry, a profile for resolving conflicts based on revision information of a rule of a plurality of playbook documents, the rule specifying a standard value for the attribute; and
   generating, by the processing circuitry, the agent for the resolving conflicts based on the profile for resolving conflicts and a set of playbook documents of the plurality of playbook documents.
Embodiment 37. The method of embodiment 36, further comprising:
   based on determining that a change to a playbook document of the plurality of playbook documents is associated with the attribute of the electronic document, determining, by the processing circuitry, the revision information based on the change.
Embodiment 38. The method of any of embodiments 32 to 37, further comprising:
   receiving, by the processing circuitry and from a user device, user input data; and
   determining, by the processing circuitry, the second value for the attribute of the electronic document to resolve the conflict based on the user input data received from the user device.
Embodiment 39. The method of any of embodiments 32 to 38, further comprising:
   based on a determination that the second value for the attribute of the electronic document has been selected to resolve the conflict, generating, by the processing circuitry and based on a third agent for a third persona, the second value for the attribute, and the content of the electronic document, third feedback information for the third agent,
   wherein generating the multi-agent report for the electronic document is based on the updated first feedback information for the first persona and is further based on the third feedback information for the third persona.
Embodiment 40. Computer-readable media encoded with instructions that, when executed, cause processing circuitry to:
   generate, based on a first agent for a first persona and content of an electronic document, first feedback information for the first persona;
   based on a determination that the first feedback information for the first persona indicates a first value for an attribute of the electronic document that causes a conflict with second feedback information for a second persona and that a second value for the attribute of the electronic document has been selected to resolve the conflict, generate, based on the first agent for the first persona, the second value for the attribute, and the content of the electronic document, updated first feedback information for the first persona;
   generate, based on the updated first feedback information for the first persona, a multi-agent report for the electronic document; and
   output the multi-agent report.
Embodiment 41. A system for managing agents providing feedback to electronic documents, the system comprising:
   processing circuitry; and
   computer readable media comprising instructions that, when executed, cause the processing circuitry to:
      based on a determination that each change of a first plurality of changes to a first plurality of historical documents is associated with a first user and that the first user is assigned a first persona, generate a first agent for the first persona based on both the first plurality of changes and first source data;
      determine a first plurality of vector embeddings for the first agent based on the first source data; determine a second plurality of vector embeddings based on second source data;
      determine a similarity value based on the first plurality of vector embeddings and the second plurality of vector embeddings;
      based on the similarity value, determine that the first source data is associated with a second persona different from the first persona; and
      generate a second agent for the second persona based on the first source data.
Embodiment 42. The system of embodiment 41, wherein the instructions further cause the processing circuitry to:
   generate, based on the second agent and content of an electronic document, feedback information for the second persona;
   generate data for a user interface configured to display an indication of the feedback information for the second persona; and
   output, to a user device, the data for the user interface to cause the user device to display the user interface configured to display the indication of the feedback information for the second persona.
Embodiment 43. The system of embodiment 41 or 42, wherein the instructions further cause the processing circuitry to:
   generate, based on the second agent and content of an electronic document, feedback information for the second persona; and
   output an indication of the feedback information to a user device associated with the electronic document.
Embodiment 44. The system of any of embodiments 41 to 43, wherein the instructions further cause the processing circuitry to:
   generate an encoder based on external data associated with the first agent,
   wherein to determine the first plurality of vector embeddings for the first agent, the instructions cause the processing circuitry to generate, with the encoder, the first plurality of vector embeddings based on the first source data, and
   wherein to determine the second plurality of vector embeddings for the second agent, the instructions cause the processing circuitry to generate, with the encoder, the second plurality of vector embeddings based on the second source data.
Embodiment 45. The system of embodiment 44, wherein to generate the encoder, the instructions cause the processing circuitry to:
   determine vocabulary information based on the external data; and
   generate the encoder based on the vocabulary information.
Embodiment 46. The system of embodiment 44 or 45, wherein the instructions further cause the processing circuitry to:
   determine whether to initiate the generation of the encoder based on the external data.
Embodiment 47. The system of any of embodiments 41 to 46, wherein to determine the similarity value, the instructions cause the processing circuitry to:
   determine a cosine similarity value between the first plurality of vector embeddings and the second plurality of vector embeddings; or
   determine a Euclidean distance value between the first plurality of vector embeddings and the second plurality of vector embeddings.
Embodiment 48. The system of any of embodiments 41 to 47,
   wherein the second plurality of vector embeddings are for a third agent associated with a third persona different from the first agent;
   wherein to determine that the first source data is associated with the second persona, the instructions cause the processing circuitry to determine that the similarity value satisfies a threshold value for merging agents, and
   wherein the instructions cause the processing circuitry to generate the second agent for the second persona based on the first source data and based further on the second source data.
Embodiment 49. The system of embodiment 48, wherein the instructions further cause the processing circuitry to:
   determine that each change of a second plurality of changes to a second plurality of historical documents is associated with one or more users and that each user of the one or more users is associated with the second persona,
   wherein the instructions cause the processing circuitry to generate the second agent for the second persona based on the first source data and the second source data and based further on the second plurality of changes.
Embodiment 50. The system of embodiment 48,
   wherein the second persona is associated with a combined role;
   wherein the first persona is associated with a first portion of the combined role; and wherein the third persona is associated with a second portion of the combined role.
Embodiment 51. The system of any of embodiments 41 to 50, wherein the instructions further cause the processing circuitry to:
   generate, based on the second agent and content of an electronic document, feedback information for the second persona;
   generate, based on the feedback information for the second persona, a multi-agent report for the electronic document; and
   output the multi-agent report.
Embodiment 52. The system of any of embodiments 41 to 51,
   wherein the instructions cause the processing circuitry to generate the first agent for the first persona based on both the first plurality of changes and first source data and based further on the second source data; and
   wherein to determine that the first source data is associated with the second persona, the instructions cause the processing circuitry to determine that the similarity value satisfies a threshold value for splitting agents.
Embodiment 53. The system of embodiment 52, wherein the instructions further cause the processing circuitry to:
   determine that each change of a second plurality of changes to a second plurality of historical documents is associated with one or more users and that each user of the one or more users is associated with the second persona,
   wherein the instructions cause the processing circuitry to generate the second agent for the second persona based on the first source data and based further on the second plurality of changes.
Embodiment 54. The system of embodiment 52 or 53, the instructions further cause the processing circuitry to:
   determine a centroid position for cluster of vector embeddings for the first agent, the cluster of vector embeddings for the first agent comprising the first plurality of vector embeddings and the second plurality of vector embeddings; and
   based on disturbing the centroid position of the cluster of vector embeddings, select a first subset of the cluster of vector embeddings as the first plurality of vector embeddings and a second subset of the cluster of vector embeddings as the second plurality of vector embeddings.
Embodiment 55. The system of any of embodiments 52 to 54, wherein the instructions further cause the processing circuitry to generate a third agent for a third persona based the second source data.
Embodiment 56. The system of embodiment 55,
   wherein the first persona is associated with a combined role;
   wherein the second persona is associated with a first portion of the combined role; and wherein the third persona is associated with a second portion of the combined role.
Embodiment 57. The system of embodiment 55 or 56,
   wherein the first persona is associated with a realtor role;
   wherein the second persona is associated with a buyer of the realtor role; and wherein the third persona is associated with a seller of the realtor role.
Embodiment 58. A method for managing agents providing feedback to electronic documents, the method comprising:
   based on a determination that each change of a first plurality of changes to a first plurality of historical documents is associated with a first user and that the first user is assigned a first persona, generating, by processing circuitry, a first agent for the first persona based on both the first plurality of changes and first source data;
   determining, by the processing circuitry, a first plurality of vector embeddings for the first agent based on the first source data;
   determining, by the processing circuitry, a second plurality of vector embeddings based on second source data;
   determining, by the processing circuitry, a similarity value based on the first plurality of vector embeddings and the second plurality of vector embeddings;
   based on the similarity value, determining, by the processing circuitry, that the first source data is associated with a second persona different from the first persona; and
   generating, by the processing circuitry, a second agent for the second persona based on the first source data.
Embodiment 59. The method of embodiment 58, the method further comprising:
   generating, by the processing circuitry and based on the second agent and content of an electronic document, feedback information for the second persona;
   generating, by the processing circuitry, data for a user interface configured to display an indication of the feedback information for the second persona; and
   outputting, by the processing circuitry and to a user device, the data for the user interface to cause the user device to display the user interface configured to display the indication of the feedback information for the second persona.
Embodiment 60. Computer-readable media encoded with instructions that, when executed, cause processing circuitry to:
   based on a determination that each change of a first plurality of changes to a first plurality of historical documents is associated with a first user and that the first user is assigned a first persona, generate a first agent for the first persona based on both the first plurality of changes and first source data;
   determine a first plurality of vector embeddings for the first agent based on the first source data;
   determine a second plurality of vector embeddings based on second source data;
   determine a similarity value based on the first plurality of vector embeddings and the second plurality of vector embeddings;
   based on the similarity value, determine that the first source data is associated with a second persona different from the first persona; and
   generate a second agent for the second persona based on the first source data.
Embodiment 61. A system for generating executed electronic documents, the system comprising:
   processing circuitry; and
   computer readable media comprising instructions that, when executed, cause the processing circuitry to:
      determine definition information for an agent of a plurality of agents configured to perform one or more actions associated with an electronic document;
      determine, based on the definition information for the agent and user information for a user associated with the electronic document, an ordered list of agent assignments indicating a plurality of actions to be performed by the plurality of agents;
      based on a determination that the ordered list of agent assignments indicates the agent, determine, based on the definition information for the agent, input data for the agent and cause the agent to generate output data based on the input data; and
      generate an executed document based on the output data.
Embodiment 62. The system of embodiment 61, wherein the definition information for the agent indicates utilization information specifying examples for when to select the agent, wherein the instructions further cause the processing circuitry to:
   determine prompt information from the user; and
   generate metadata based on the utilization information,
   wherein, to determine the ordered list of agent assignments, the instructions cause the processing circuitry to generate, with one or more machine learning models, the ordered list of agent assignments based on the prompt information and the metadata.
Embodiment 63. The system of embodiment 62, wherein to the instructions further cause the processing circuitry to generate the metadata based on the utilization information and further based on a conversation history for the user.
Embodiment 64. The system of embodiment 62 or 63, wherein the utilization information comprises natural language instructions,
   wherein the instructions cause the processing circuitry to generate the metadata to indicate the natural language instructions; and
   wherein the instructions cause the processing circuitry to generate, with one or more machine learning models, the ordered list of agent assignments based on the prompt information and the natural language instructions indicated in the metadata.
Embodiment 65. The system of any of embodiments 62 to 64, wherein the definition information for the agent indicates a subsequent agent for processing an output of the agent, wherein the instructions cause the processing circuitry to generate the metadata to indicate the subsequent agent; and
   wherein, to determine the ordered list of agent assignments, the instructions cause the processing circuitry to generate, with one or more machine learning models, the ordered list of agent assignments based on the prompt information and the subsequent agent indicated in the metadata.
Embodiment 66. The system of any of embodiments 62 to 65, wherein to generate the metadata, the instructions cause the processing circuitry to:
   summarize, with the one or more machine learning models, the utilization information and one or more of conversation history for the user or user information for the user.
Embodiment 67. The system of any of embodiments 61 to 65, wherein the output data comprises feedback information to content of the electronic document, and wherein to generate the executed document, the instructions cause the processing circuitry to:
   generate data for a user interface configured to display an indication of the feedback information to the content of the electronic document;
   output, to a user device, the data for the user interface to cause the user device to display the user interface configured to display the indication of the feedback information;
   receive, from the user device, an indication of one or more changes to the electronic document; and
   generate the executed document based on the one or more changes to the electronic document.
Embodiment 68. The system of any of embodiments 61 to 67, wherein the instructions cause the processing circuitry to, based on a determination that each change of a plurality of changes to a plurality of historical documents is associated with a set of users and that each user of the set of users is assigned a particular persona, generate the agent based on the plurality of changes.
Embodiment 69. The system of any of embodiments 61 to 68, wherein the instructions further cause the processing circuitry to generate workflow state data based on determining that the agent generated the output data.
Embodiment 70. The system of embodiment 69, wherein the instructions further cause the processing circuitry to:
   generate data for a user interface configured to display an indication of the workflow state data; and
   output, to a user device, the data for the user interface to cause the user device to display the user interface configured to display the indication of the workflow state data.
Embodiment 71. The system of any of embodiments 61 to 70, wherein the plurality of agents comprise one or more of a machine learning agent, a natural understanding agent, an agent for a persona, an identification verification (IDV) agent, or an electronic execution agent.
Embodiment 72. A method for generating executed electronic documents, the method comprising:
   determining, by processing circuitry, definition information for an agent of a plurality of agents configured to perform one or more actions associated with an electronic document;
   determining, by the processing circuitry and based on the definition information for the agent and user information for a user associated with the electronic document, an ordered list of agent assignments indicating a plurality of actions to be performed by the plurality of agents;
   based on a determination that the ordered list of agent assignments indicates the agent, determining, by the processing circuitry and based on the definition information for the agent, input data for the agent and cause the agent to generate output data based on the input data; and
   generating, by the processing circuitry, an executed document based on the output data.
Embodiment 73. The method of embodiment 72, wherein the definition information for the agent indicates utilization information specifying examples for when to select the agent, the method further comprising:
   determining, by the processing circuitry, prompt information from the user; and
   generating, by the processing circuitry, metadata based on the utilization information,
   wherein determining the ordered list of agent assignments comprises generating, with one or more machine learning models, the ordered list of agent assignments based on the prompt information and the metadata.
Embodiment 74. The method of embodiment 73, further comprising generating, by the processing circuitry, the metadata based on the utilization information and further based on a conversation history for the user.
Embodiment 75. The method of embodiment 73 or 74, wherein the utilization information comprises natural language instructions, the method further comprising generating, by the processing circuitry, the metadata to indicate the natural language instructions; and wherein generating, with one or more machine learning models, the ordered list of agent assignments is based on the prompt information and the natural language instructions indicated in the metadata.
Embodiment 76. The method of any of embodiments 73 to 75,
   wherein the definition information for the agent indicates a subsequent agent for processing an output of the agent, and
   wherein determining the ordered list of agent assignments comprises generating, with one or more machine learning models, the ordered list of agent assignments based on the prompt information and the subsequent agent indicated in the metadata.
Embodiment 77. The method of any of embodiments 73 to 76, wherein generating the metadata comprises:
   summarizing, with the one or more machine learning models, the utilization information and one or more of conversation history for the user or user information for the user.
Embodiment 78. The method of any of embodiments 72 to 77, wherein the output data comprises feedback information to content of the electronic document, wherein generating the executed document comprises:
   generating data for a user interface configured to display an indication of the feedback information to the content of the electronic document;
   outputting, to a user device, the data for the user interface to cause the user device to display the user interface configured to display the indication of the feedback information;
   receiving, from the user device, an indication of one or more changes to the electronic document; and
   generating the executed document based on the one or more changes to the electronic document.
Embodiment 79. The method of any of embodiments 72 to 78, further comprising, based on a determination that each change of a plurality of changes to a plurality of historical documents is associated with a set of users and that each user of the set of users is assigned a particular persona, generating, by the processing circuitry, the agent based on the plurality of changes.
Embodiment 80. Computer-readable media encoded with instructions that, when executed, cause processing circuitry to:
   determine definition information for an agent of a plurality of agents configured to perform one or more actions associated with an electronic document;
   determine, based on the definition information for the agent and user information for a user associated with the electronic document, an ordered list of agent assignments indicating a plurality of actions to be performed by the plurality of agents;
   based on a determination that the ordered list of agent assignments indicates the agent, determine, based on the definition information for the agent, input data for the agent and cause the agent to generate output data based on the input data; and
   generate an executed document based on the output data.
Embodiment 81. A method for generating multi-agent reports for electronic documents, the method comprising:
   based on a determination that each change of a first plurality of changes to a plurality of historical documents is associated with a first user and that the first user is assigned a first persona, determining, by processing circuitry, first revision information based on the first plurality of changes;
   generating, by the processing circuitry and based on the first revision information and content of an electronic document, first feedback information for the first persona;
   based on a determination that each change of a second plurality of changes to the plurality of historical documents is associated with a second user and that the second user is assigned a second persona, determining, by the processing circuitry, second revision information based on the second plurality of changes;
   generating, by the processing circuitry and based on the second revision information and the content of the electronic document, second feedback information for the second persona;
   generating, by the processing circuitry and based on the first feedback information for the first persona and the second feedback information for the second persona, a multi-agent report for the electronic document; and
   outputting, by the processing circuitry, the multi-agent report.
Embodiment 82. The method of embodiment 81, wherein generating the first feedback information for the first persona comprises:
   generating a profile for the first persona based on the first revision information;
   generating an agent for the first persona based on the profile for the first persona and based on a set of historical documents of the plurality of historical documents; and
   generating, with one or more machine learning models, the first feedback information for the first persona based on the agent for the first persona and the content of the electronic document.
Embodiment 83. The method of embodiment 82, wherein generating the first feedback information for the first persona comprises:
   inferring behavior data for the first persona based on the first revision information,
   wherein generating the profile is based on the behavior data.
Embodiment 84. The method of embodiment 83, wherein inferring the behavior data for the first persona comprises:
   generating, with the one or more machine learning models, first behavior data for the first persona based on the first revision information;
   generating, with the one or more machine learning models, second behavior data for the first persona based on the first revision information and the first behavior data; and
   based on a determination that a difference between the first behavior data and the second behavior data satisfy a threshold, setting the behavior data to the second behavior data.
Embodiment 85. The method of embodiment 84, wherein to inferring the behavior data for the first persona comprises:
   determining that the difference between the first behavior data and the second behavior data satisfy the threshold based on a first number of content words of the first behavior data and a second number of content words of the second behavior data.
Embodiment 86. The method of any of embodiments 82 to 85, wherein generating the first feedback information for the first persona comprises:
   based on a determination that a particular historical document of the plurality of historical documents includes a document type that is associated with the first persona, determining the set of historical documents to include the particular historical document.
Embodiment 87. The method of any of embodiments 81 to 86, wherein determining the first revision information comprises:
   summarizing, with one or more machine learning models, the first plurality of changes to the plurality of historical documents.
Embodiment 88. The method of any of embodiments 81 to 87, wherein the first persona comprises a legal persona, a technical persona, a financial persona, or a performance metrics persona.
Embodiment 89. The method of any of embodiments 81 to 88, further comprising:
   determining, by the processing circuitry, that a change of the plurality of changes is associated with the first user based on a determination that a user device associated with the first user indicates one or more of a removal of content from a historical document of the plurality of historical documents or an addition of content to the historical document.
Embodiment 90. The method of any of embodiments 81 to 89,
   wherein generating the multi-agent report comprises generating data for a user interface configured to display an indication of the multi-agent report; and
   wherein outputting the multi-agent report comprises outputting, to a user device, the data for the user interface to cause the user device to display the user interface configured to display the indication of the multi-agent report.
Embodiment 91. A system for generating multi-agent reports for electronic documents, the system comprising:
   processing circuitry; and
   computer readable media comprising instructions that, when executed, cause the processing circuitry to:
      based on a determination that each change of a first plurality of changes to a plurality of historical documents is associated with a first user and that the first user is assigned a first persona, determine first revision information based on the first plurality of changes;
      generate, based on the first revision information and content of an electronic document, first feedback information for the first persona;
      based on a determination that each change of a second plurality of changes to the plurality of historical documents is associated with a second user and that the second user is assigned a second persona, determine second revision information based on the second plurality of changes; generate, based on the second revision information and the content of the electronic document, second feedback information for the second persona;
      generate, based on the first feedback information for the first persona and the second feedback information for the second persona, a multi-agent report for the electronic document; and output the multi-agent report.
Embodiment 92. The system of embodiment 91, wherein the processing circuitry are further configured to perform the steps recited in any of embodiments 81 to 90.
Embodiment 93. Computer-readable media encoded with instructions that, when executed, cause processing circuitry to:
   based on a determination that each change of a first plurality of changes to a plurality of historical documents is associated with a first user and that the first user is assigned a first persona, determine first revision information based on the first plurality of changes;
   generate, based on the first revision information and content of an electronic document, first feedback information for the first persona;
   based on a determination that each change of a second plurality of changes to the plurality of historical documents is associated with a second user and that the second user is assigned a second persona, determine second revision information based on the second plurality of changes;
   generate, based on the second revision information and the content of the electronic document, second feedback information for the second persona;
   generate, based on the first feedback information for the first persona and the second feedback information for the second persona, a multi-agent report for the electronic document; and
   output the multi-agent report.
Embodiment 94. The computer-readable storage medium of embodiment 93, wherein the instructions further cause the processing circuitry to perform the steps recited in any of embodiments 81 to 90.

In an embodiment, one or more computer-readable non-transitory storage media embody software that is operable when executed to perform in a system according to the invention or any of the above mentioned embodiments.

In an embodiment, a computer-implemented method uses a system according to the invention or any of the above mentioned embodiments.
In an embodiment, a computer program product, preferably comprising a computer-readable non-transitory storage media, is used in a system according to the invention or any of the above mentioned embodiments.

## Claims

1. A method for generating multi-agent reports for electronic documents, the method comprising:
based on a determination that each change of a first plurality of changes to a plurality of historical documents is associated with a first user and that the first user is assigned a first persona, determining, by processing circuitry, first revision information based on the first plurality of changes;
generating, by the processing circuitry and based on the first revision information and content of an electronic document, first feedback information for the first persona;
based on a determination that each change of a second plurality of changes to the plurality of historical documents is associated with a second user and that the second user is assigned a second persona, determining, by the processing circuitry, second revision information based on the second plurality of changes;
generating, by the processing circuitry and based on the second revision information and the content of the electronic document, second feedback information for the second persona;
generating, by the processing circuitry and based on the first feedback information for the first persona and the second feedback information for the second persona, a multi-agent report for the electronic document; and
outputting, by the processing circuitry, the multi-agent report.

2. The method of claim 1, wherein generating the first feedback information for the first persona comprises:
generating a profile for the first persona based on the first revision information;
generating an agent for the first persona based on the profile for the first persona and based on a set of historical documents of the plurality of historical documents; and
generating, with one or more machine learning models, the first feedback information for the first persona based on the agent for the first persona and the content of the electronic document.

3. The method of claim 2, wherein generating the first feedback information for the first persona comprises:
inferring behavior data for the first persona based on the first revision information,
wherein generating the profile is based on the behavior data.

4. The method of claim 3, wherein inferring the behavior data for the first persona comprises:
generating, with the one or more machine learning models, first behavior data for the first persona based on the first revision information;
generating, with the one or more machine learning models, second behavior data for the first persona based on the first revision information and the first behavior data; and
based on a determination that a difference between the first behavior data and the second behavior data satisfy a threshold, setting the behavior data to the second behavior data.

5. The method of claim 4, wherein to inferring the behavior data for the first persona comprises:
determining that the difference between the first behavior data and the second behavior data satisfy the threshold based on a first number of content words of the first behavior data and a second number of content words of the second behavior data.

6. The method of any of claims 2 to 5, wherein generating the first feedback information for the first persona comprises:
based on a determination that a particular historical document of the plurality of historical documents includes a document type that is associated with the first persona, determining the set of historical documents to include the particular historical document.

7. The method of any of claims 1 to 6, wherein determining the first revision information comprises:
summarizing, with one or more machine learning models, the first plurality of changes to the plurality of historical documents.

8. The method of any of claims 1 to 7, wherein the first persona comprises a legal persona, a technical persona, a financial persona, or a performance metrics persona.

9. The method of any of claims 1 to 8, further comprising:
determining, by the processing circuitry, that a change of the plurality of changes is associated with the first user based on a determination that a user device associated with the first user indicates one or more of a removal of content from a historical document of the plurality of historical documents or an addition of content to the historical document.

10. The method of any of claims 1 to 9,
wherein generating the multi-agent report comprises generating data for a user interface configured to display an indication of the multi-agent report; and
wherein outputting the multi-agent report comprises outputting, to a user device, the data for the user interface to cause the user device to display the user interface configured to display the indication of the multi-agent report.

11. A system for generating multi-agent reports for electronic documents, the system comprising:
processing circuitry; and
computer readable media comprising instructions that, when executed, cause the processing circuitry to:
based on a determination that each change of a first plurality of changes to a plurality of historical documents is associated with a first user and that the first user is assigned a first persona, determine first revision information based on the first plurality of changes;
generate, based on the first revision information and content of an electronic document, first feedback information for the first persona;
based on a determination that each change of a second plurality of changes to the plurality of historical documents is associated with a second user and that the second user is assigned a second persona, determine second revision information based on the second plurality of changes;
generate, based on the second revision information and the content of the electronic document, second feedback information for the second persona;
generate, based on the first feedback information for the first persona and the second feedback information for the second persona, a multi-agent report for the electronic document; and
output the multi-agent report.

12. The system of claim 11, wherein the processing circuitry are further configured to perform the steps recited in any of claims 2 to 10.

13. Computer-readable media encoded with instructions that, when executed, cause processing circuitry to:
based on a determination that each change of a first plurality of changes to a plurality of historical documents is associated with a first user and that the first user is assigned a first persona, determine first revision information based on the first plurality of changes;
generate, based on the first revision information and content of an electronic document, first feedback information for the first persona;
based on a determination that each change of a second plurality of changes to the plurality of historical documents is associated with a second user and that the second user is assigned a second persona, determine second revision information based on the second plurality of changes;
generate, based on the second revision information and the content of the electronic document, second feedback information for the second persona;
generate, based on the first feedback information for the first persona and the second feedback information for the second persona, a multi-agent report for the electronic document; and
output the multi-agent report.

14. The computer-readable storage medium of claim 13, wherein the instructions further cause the processing circuitry to perform the steps recited in any of claims 2 to 10.
